(19) **Europäisches Patentamt / European Patent Office / Office européen des brevets**

(11) **EP 4 351 027 A1**

(12) # EUROPEAN PATENT APPLICATION
published in accordance with Art. 153(4) EPC

(43) Date of publication:
**10.04.2024 Bulletin 2024/15**

(21) Application number: **22811597.8**

(22) Date of filing: **24.05.2022**

(51) International Patent Classification (IPC):
**H04B 7/0456** (2017.01)    **H04B 7/06** (2006.01)
**H04W 72/12** (2009.01)    **H04L 5/00** (2006.01)

(52) Cooperative Patent Classification (CPC):
**H04B 7/0456; H04B 7/06; H04L 5/00; H04W 72/12;**
Y02D 30/70

(86) International application number:
**PCT/KR2022/007320**

(87) International publication number:
**WO 2022/250404 (01.12.2022 Gazette 2022/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.05.2021 KR 20210067186**

(71) Applicant: **LG Electronics Inc.**
**Yeongdeungpo-gu**
**Seoul 07336 (KR)**

(72) Inventors:
• **CHUNG, Jaehoon**
  **Seoul 06772 (KR)**
• **KANG, Jiwon**
  **Seoul 06772 (KR)**
• **GO, Seongwon**
  **Seoul 06772 (KR)**
• **PARK, Haewook**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD FOR TRANSMITTING/RECEIVING PUSCH IN WIRELESS COMMUNICATION SYSTEM AND DEVICE THEREFOR**

(57)    A method of transmitting and receiving a PUSCH in a wireless communication system and a device therefor are disclosed. The method performed by a UE may comprise receiving, from a base station, DCI including information for a TCI state, updating beam information for the PUSCH based on the TCI state, determining a precoder for the PUSCH based on the TPMI or the at least one SRI, and transmitting the PUSCH to the base station based on the precoder and the beam information.

【FIG. 19】

EP 4 351 027 A1

**Description**

[Technical Field]

The present disclosure relates to a wireless communication system, and more particularly to a method of transmitting and receiving a physical uplink shared channel (PUSCH) and a device therefor.

[Background Art]

Mobile communication systems have been developed to provide a voice service while ensuring the activity of a user. However, the area of the mobile communication systems has extended to a data service in addition to a voice. Due to the current explosive increase in traffic, there is a shortage of resources, and thus users demand a higher speed service. Accordingly, there is a need for a more advanced mobile communication system.

Requirements for next-generation mobile communication systems need to able to support the accommodation of explosive data traffic, a dramatic increase in data rate per user terminal, the accommodation of a significant increase in the number of connected devices, very low end-to-end latency, and high-energy efficiency. To this end, studies have been conducted on various technologies such as dual connectivity, massive multiple input multiple output (MIMO), in-band full duplex, non-orthogonal multiple access (NOMA), super wideband support, and device networking.

A technology of changing/updating transmit (Tx) and receive (Rx) beams of uplink channel/reference signal (RS) using downlink (DL) downlink control information (DCI) is being discussed. However, if only an uplink beam is changed/updated, the existing precoder/ modulation coding scheme (MCS), etc. may not be valid.

[Disclosure]

[Technical Problem]

In order to solve the above-described and other problems, the present disclosure provides a method of changing/updating a transmit precoding matrix indicator (TPMI)/MCS, etc. for a physical uplink shared channel (PUSCH) using transmission configuration indication (TCI) information (or TCI state) of DL DCI, and a device therefor.

The present disclosure also provides a method of jointly encoding TCI information (or TCI state) and TPMI/MCS, etc. and a device therefor.

The present disclosure also provides a method of adding a field for changing/updating TPMI/MCS, etc. to DL DCI and a device therefor.

The present disclosure also provides a method of using an open-loop precoder as a precoder for PUSCH when a PUSCH beam is changed/updated using TCI information (or TCI state) of DL DCI, and a device therefor.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Technical Solution]

The present disclosure proposes a method of transmitting a physical uplink shared channel (PUSCH) in a wireless communication system. The method performed by a user equipment (UE) may comprise receiving, from a base station (BS), downlink control information (DCI) including information for a transmission configuration indication (TCI) state, the TCI state being related to a transmit precoding matrix indicator (TPMI) or at least one sounding reference signal resource indicator (SRI), updating beam information for the PUSCH based on the TCI state, determining a precoder for the PUSCH based on the TPMI or the at least one SRI, and transmitting the PUSCH to the BS based on the precoder and the beam information.

Based on a transmission of the PUSCH being a codebook based uplink transmission, the TPMI may be based on a rank indicator (RI) and/or a number of ports.

The TCI state may be related to a modulation and coding scheme (MCS) based on the RI and/or the number of ports, and the PUSCH may be transmitted based on the MCS.

Based on a transmission of the PUSCH being a codebook based uplink transmission, the TPMI may be related to a maximum rank indicator (RI), a precoder based on the TPMI may be reduced based on an RI and/or a number of ports, and the PUSCH may be transmitted based on the reduced precoder.

Based on a transmission of the PUSCH being a non-codebook based uplink transmission, the at least one SRI may be based on a rank indicator (RI).

The DCI may be to schedule a physical downlink shared channel (PDSCH).

The PUSCH may be a configured grant PUSCH or a dynamic grant PUSCH for repetition.

A user equipment (UE) configured to transmit a physical uplink shared channel (PUSCH) in a wireless communication system according to the present disclosure may comprise at least one transceiver, at least one processor, and at least one memory operably connected to the at least one processor, wherein the at least one memory may be configured to store instructions performing operations based on being executed by the at least one processor, wherein the operations may comprise receiving, from a base station (BS), downlink control information (DCI) including information for a transmission configuration indication (TCI) state, the TCI state being related to a transmit precoding matrix indicator (TPMI) or at least one sounding reference signal resource indicator (SRI), updating beam information for the PUSCH based on the TCI state, determining a precoder for the PUSCH based on the TPMI or the at least one SRI, and transmitting the PUSCH to the BS based on the precoder and the beam information.

The present disclosure proposes a method of receiving a physical uplink shared channel (PUSCH) in a wireless communication system. The method performed by a base station (BS) may comprise transmitting, to a user equipment (UE), downlink control information (DCI) including information for a transmission configuration indication (TCI) state, the TCI state being related to a transmit precoding matrix indicator (TPMI) or at least one sounding reference signal resource indicator (SRI), beam information for the PUSCH being updated based on the TCI state, a precoder for the PUSCH being determined based on the TPMI or the at least one SRI, and receiving the PUSCH from the UE based on the precoder and the beam information.

Based on a reception of the PUSCH being a codebook based uplink reception, the TPMI may be based on a rank indicator (RI) and/or a number of ports.

The TCI state may be related to a modulation and coding scheme (MCS) based on the RI and/or the number of ports, and the PUSCH may be received based on the MCS.

Based on a reception of the PUSCH being a codebook based uplink reception, the TPMI may be related to a maximum rank indicator (RI), a precoder based on the TPMI may be reduced based on an RI and/or a number of ports, and the PUSCH may be received based on the reduced precoder.

Based on a reception of the PUSCH being a non-codebook based uplink reception, the at least one SRI may be based on a rank indicator (RI).

The DCI may be to schedule a physical downlink shared channel (PDSCH).

The PUSCH may be a configured grant PUSCH or a dynamic grant PUSCH for repetition.

A base station (BS) configured to receive a physical uplink shared channel (PUSCH) in a wireless communication system according to the present disclosure may comprise at least one transceiver, at least one processor, and at least one memory operably connected to the at least one processor, wherein the at least one memory may be configured to store instructions performing operations based on being executed by the at least one processor, wherein the operations may comprise transmitting, to a user equipment (UE), downlink control information (DCI) including information for a transmission configuration indication (TCI) state, the TCI state being related to a transmit precoding matrix indicator (TPMI) or at least one sounding reference signal resource indicator (SRI), beam information for the PUSCH being updated based on the TCI state, a precoder for the PUSCH being determined based on the TPMI or the at least one SRI, and receiving the PUSCH from the UE based on the precoder and the beam information.

A processing apparatus configured to control a user equipment (UE) to transmit a physical uplink shared channel (PUSCH) in a wireless communication system according to the present disclosure may comprise at least one processor, and at least one memory operably connected to the at least one processor, wherein the at least one memory may be configured to store instructions performing operations based on being executed by the at least one processor, wherein the operations may comprise receiving, from a base station (BS), downlink control information (DCI) including information for a transmission configuration indication (TCI) state, the TCI state being related to a transmit precoding matrix indicator (TPMI) or at least one sounding reference signal resource indicator (SRI), updating beam information for the PUSCH based on the TCI state, determining a precoder for the PUSCH based on the TPMI or the at least one SRI, and transmitting the PUSCH to the BS based on the precoder and the beam information.

In a computer readable storage medium storing at least one instruction according to the present disclosure, the at least one instruction may be configured to allow at least one processor to control operations based on being executed by the at least one processor, and the operations may comprise receiving, from a base station (BS), downlink control information (DCI) including information for a transmission configuration indication (TCI) state, the TCI state being related to a transmit precoding matrix indicator (TPMI) or at least one sounding reference signal resource indicator (SRI), updating beam information for the PUSCH based on the TCI state, determining a precoder for the PUSCH based on the TPMI or the at least one SRI, and transmitting the PUSCH to the BS based on the precoder and the beam information.

[Advantageous Effects]

The present disclosure has an effect of changing/updating TPMI/MCS, etc. for PUSCH based on DL DCI.

The present disclosure also has an effect of changing/updating TPMI/MCS, etc. for PUSCH based on DL DCI by jointly encoding TCI information (or TCI state) and TPMI/MCS, etc.

The present disclosure also has an effect of changing/updating TPMI/MCS, etc. using DL DCI by adding a field to the DL DCI.

The present disclosure also has an effect of changing/updating a precoder together with bean change/update using an open-loop precoder as a precoder for PUSCH.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[Description of Drawings]

The accompanying drawings, which are included to provide a further understanding of the present disclosure and constitute a part of the detailed description, illustrate embodiments of the present disclosure and serve to explain technical features of the present disclosure together with the description.

FIG. 1 illustrates an example of an overall system structure of NR to which a method described in the present disclosure is applicable.

FIG. 2 illustrates a relationship between an uplink frame and a downlink frame in a wireless communication system to which a method described in the present disclosure is applicable.

FIG. 3 illustrates an example of a frame structure in an NR system.

FIG. 4 illustrates an example of a resource grid supported by a wireless communication system to which a method described in the present disclosure is applicable.

FIG. 5 illustrates a slot structure of an NR frame to which a method described in the present disclosure is applicable.

FIG. 6 illustrates examples of a resource grid per antenna port and numerology to which a method described in the present disclosure is applicable.

FIG. 7 illustrates physical channels and general signal transmission used in a 3GPP system.

FIG. 8 is a concept view illustrating an example of a beam-related measurement model.

FIG. 9 illustrates an example of a Tx beam related to a DL BM procedure.

FIG. 10 is a flow chart illustrating an example of a DL BM procedure using an SSB.

FIG. 11 illustrates an example of a DL BM procedure using a CSI-RS.

FIG. 12 is a flow chart illustrating an example of a receive (Rx) beam determination process of a UE.

FIG. 13 is a flow chart illustrating an example of a transmit (Tx) beam determination process of a base station.

FIG. 14 illustrates an example of resource allocation in a time domain and a frequency domain related to an operation of FIG. 11.

FIG. 15 illustrates an example of an UL BM procedure using an SRS.

FIG. 16 is a flow chart illustrating an example of an UL BM procedure using an SRS.

FIG. 17 illustrates an example of downlink transmission and reception operation.

FIG. 18 illustrates an example of uplink transmission and reception operation.

FIG. 19 is a flow chart illustrating an operation method of a UE described in the present disclosure.

FIG. 20 is a flow chart illustrating an operation method of a base station described in the present disclosure.

FIG. 21 illustrates a communication system (1) applied to the present disclosure.

FIG. 22 illustrates a wireless device applicable to the present disclosure.

FIG. 23 illustrates another example of a wireless device applied to the present disclosure.

FIG. 24 illustrates a portable device applied to the present disclosure.

[Mode for Invention]

Reference will now be made in detail to embodiments of the disclosure, examples of which are illustrated in the accompanying drawings. A detailed description to be disclosed below together with the accompanying drawing is to describe exemplary embodiments of the disclosure and not to describe a unique embodiment for carrying out the disclosure. The detailed description below includes details to provide a complete understanding of the disclosure. However, those skilled in the art know that the disclosure may be carried out without the details.

In some cases, in order to prevent a concept of the disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In downlink, the transmitter may be part of the terminal and the receiver may be part of the terminal. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various radio access system including CDMA, FDMA, TDMA, OFDMA, SC-FDMA, and the like. The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro.

For clarity of description, the technical spirit of the disclosure is described based on the 3GPP communication system (e.g., LTE-A or NR), but the technical spirit of the disclosure are not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system, "xxx" means a standard document detail number. Matters disclosed in a standard document opened before the disclosure may be referred to for a background art, terms, abbreviations, etc., used for describing the disclosure. For example, the following documents may be referred to.

3GPP LTE

- 36.211: Physical channels and modulation
- 36.212: Multiplexing and channel coding
- 36.213: Physical layer procedures
- 36.300: Overall description
- 36.331: Radio Resource Control (RRC)

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/UE sensitive to reliability and latency is being discussed. The introduction of next generation radio access technology considering enhanced mobile broadband communication (eMBB), massive MTC (mMTC), ultra-reliable and low latency communication (URLLC) is discussed, and in the disclosure, the technology is called new RAT for convenience. The NR is an expression representing an example of 5G radio access technology (RAT).

Three major requirement areas of 5G include (1) an enhanced mobile broadband (eMBB) area, (2) a massive machine type communication (mMTC) area and (3) an ultra-reliable and low latency communications (URLLC) area.

Some use cases may require multiple areas for optimization, and other use case may be focused on only one key performance indicator (KPI). 5G support such various use cases in a flexible and reliable manner.

eMBB is far above basic mobile Internet access and covers media and entertainment applications in abundant bidirectional tasks, cloud or augmented reality. Data is one of key motive powers of 5G, and dedicated voice services may not be first seen in the 5G era. In 5G, it is expected that voice will be processed as an application program using a data connection simply provided by a communication system. Major causes for an increased traffic volume include an increase in the content size and an increase in the number of applications that require a high data transfer rate. Streaming service (audio and video), dialogue type video and mobile Internet connections will be used more widely as more devices are connected to the Internet. Such many application programs require connectivity always turned on in order to push real-time information and notification to a user. A cloud storage and application suddenly increases in the mobile communication platform, and this may be applied to both business and entertainment. Furthermore, cloud storage is a special use case that tows the growth of an uplink data transfer rate. 5G is also used for remote business of cloud. When a tactile interface is used, further lower end-to-end latency is required to maintain excellent user experiences. Entertainment, for example, cloud game and video streaming are other key elements which increase a need for the mobile broadband ability. Entertainment is essential in the smartphone and tablet anywhere including high mobility environments, such as a train, a vehicle and an airplane. Another use case is augmented reality and information search for entertainment. In this case, augmented reality requires very low latency and an instant amount of data.

Furthermore, one of the most expected 5G use case relates to a function capable of smoothly connecting embedded sensors in all fields, that is, mMTC. Until 2020, it is expected that potential IoT devices will reach 20.4 billions. The industry IoT is one of areas in which 5G performs major roles enabling smart city, asset tracking, smart utility, agriculture and security infra.

URLLC includes a new service which will change the industry through remote control of major infra and a link having ultra-reliability/low available latency, such as a self-driving vehicle. A level of reliability and latency is essential for smart grid control, industry automation, robot engineering, drone control and adjustment.

Multiple use cases are described more specifically.

5G may supplement fiber-to-the-home (FTTH) and cable-based broadband (or DOCSIS) as means for providing a stream evaluated from gigabits per second to several hundreds of megabits per second. Such fast speed is necessary to deliver TV with resolution of 4K or more (6K, 8K or more) in addition to virtual reality and augmented reality. Virtual reality (VR) and augmented reality (AR) applications include immersive sports games. A specific application program may require a special network configuration. For example, in the case of VR game, in order for game companies to minimize latency, a core server may need to be integrated with the edge network server of a network operator.

An automotive is expected to be an important and new motive power in 5G, along with many use cases for the mobile communication of an automotive. For example, entertainment for a passenger requires a high capacity and a high mobility mobile broadband at the same time. The reason for this is that future users continue to expect a high-quality connection regardless of their location and speed. Another use example of the automotive field is an augmented reality dashboard. The augmented reality dashboard overlaps and displays information, identifying an object in the dark and notifying a driver of the distance and movement of the object, over a thing seen by the driver through a front window. In the future, a wireless module enables communication between automotives, information exchange between an automotive and a supported infrastructure, and information exchange between an automotive and other connected devices (e.g., devices accompanied by a pedestrian). A safety system guides alternative courses of a behavior so that a driver can drive more safely, thereby reducing a danger of an accident. A next step will be a remotely controlled or self-driven vehicle. This requires very reliable, very fast communication between different self-driven vehicles and between an automotive and infra. In the future, a self-driven vehicle may perform all driving activities, and a driver will be focused on things other than traffic, which cannot be identified by an automotive itself. Technical requirements of a self-driven vehicle require ultra-low latency and ultra-high speed reliability so that traffic safety is increased up to a level which cannot be achieved by a person.

A smart city and smart home mentioned as a smart society will be embedded as a high-density radio sensor network. The distributed network of intelligent sensors will identify the cost of a city or home and a condition for energy-efficient maintenance. A similar configuration may be performed for each home. All of a temperature sensor, a window and heating controller, a burglar alarm and home appliances are wirelessly connected. Many of such sensors are typically a low data transfer rate, low energy and a low cost. However, for example, real-time HD video may be required for a specific type of device for surveillance.

The consumption and distribution of energy including heat or gas are highly distributed and thus require automated control of a distributed sensor network. A smart grid collects information, and interconnects such sensors using digital information and a communication technology so that the sensors operate based on the information. The information may include the behaviors of a supplier and consumer, and thus the smart grid may improve the distribution of fuel, such as electricity, in an efficient, reliable, economical, production-sustainable and automated manner. The smart grid may be considered to be another sensor network having small latency.

A health part owns many application programs which reap the benefits of mobile communication. A communication system can support remote treatment providing clinical treatment at a distant place. This helps to reduce a barrier for the distance and can improve access to medical services which are not continuously used at remote farming areas. Furthermore, this is used to save life in important treatment and an emergency condition. A radio sensor network based on mobile communication can provide remote monitoring and sensors for parameters, such as the heart rate and blood pressure.

Radio and mobile communication becomes increasingly important in the industry application field. Wiring requires a high installation and maintenance cost. Accordingly, the possibility that a cable will be replaced with reconfigurable radio links is an attractive opportunity in many industrial fields. However, to achieve the possibility requires that a radio connection operates with latency, reliability and capacity similar to those of the cable and that management is simplified. Low latency and a low error probability is a new requirement for a connection to 5G.

Logistics and freight tracking is an important use case for mobile communication, which enables the tracking inventory and packages anywhere using a location-based information system. The logistics and freight tracking use case typically requires a low data speed, but a wide area and reliable location information.

In a new RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. Different numerologies may be defined by scaling reference subcarrier spacing to an integer N.

### Definition of Terms

    eLTE eNB: The eLTE eNB is the evolution of eNB that supports connectivity to EPC and NGC.

    gNB: A node which supports the NR as well as connectivity to NGC.

    New RAN: A radio access network which supports either NR or E-UTRA or interfaces with the NGC.

    Network slice: A network slice is a network created by the operator customized to provide an optimized solution for a specific market scenario which demands specific requirements with end-to-end scope.

    Network function: A network function is a logical node within a network infrastructure that has well-defined external interfaces and well-defined functional behavior.

    NG-C: A control plane interface used on NG2 reference points between new RAN and NGC.

    NG-U: A user plane interface used on NG3 references points between new RAN and NGC.

    Non-standalone NR: A deployment configuration where the gNB requires an LTE eNB as an anchor for control plane connectivity to EPC, or requires an eLTE eNB as an anchor for control plane connectivity to NGC.

    Non-standalone E-UTRA: A deployment configuration where the eLTE eNB requires a gNB as an anchor for control plane connectivity to NGC.

    User plane gateway: A termination point of NG-U interface.

### Overview of system

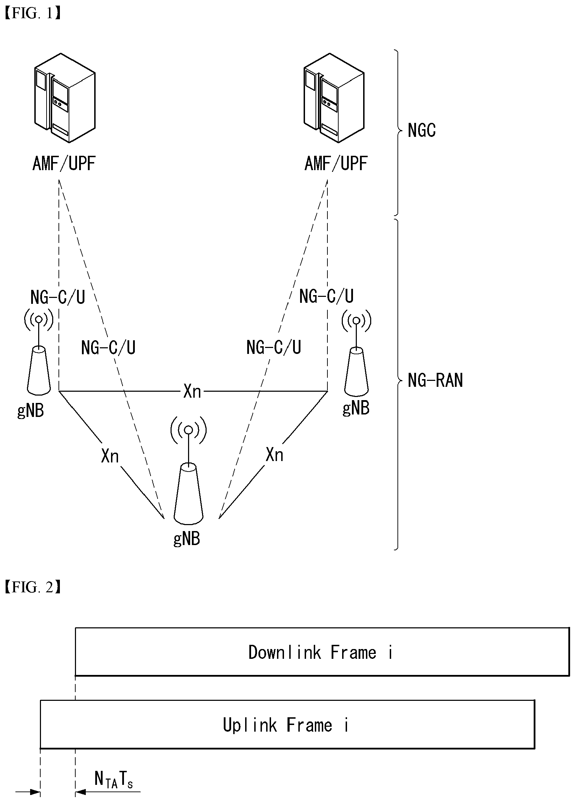

FIG. 1 illustrates an example of an overall structure of an NR system to which a method proposed in the disclosure may be applied.

Referring to FIG. 1, an NG-RAN is configured with an NG-RA user plane (new AS sublayer/PDCP/RLC/MAC/PHY) and gNBs which provide a control plane (RRC) protocol end for a user equipment (UE).

The gNBs are interconnected through an Xn interface.

The gNBs are also connected to an NGC through an NG interface.

More specifically the gNBs are connected to an access and mobility management function (AMF) through an N2 interface and to a user plane function (UPF) through an N3 interface.

### New Rat (NR) Numerology and Frame Structure

In the NR system, multiple numerologies may be supported. The numerologies may be defied by subcarrier spacing and a CP (Cyclic Prefix) overhead. Spacing between the plurality of subcarriers may be derived by scaling basic subcarrier spacing into an integer N (or $\mu$). In addition, although a very low subcarrier spacing is assumed not to be used at a very high subcarrier frequency, a numerology to be used may be selected independent of a frequency band.

In addition, in the NR system, a variety of frame structures according to the multiple numerologies may be supported.

Hereinafter, an orthogonal frequency division multiplexing (OFDM) numerology and a frame structure, which may be considered in the NR system, will be described.

A plurality of OFDM numerologies supported in the NR system may be defined as in Table 1.

[Table 1]

| $\mu$ | $\Delta f = 2^{\mu} \cdot 15$ [kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

The NR supports multiple numerologies (or subcarrier spacing (SCS)) for supporting various 5G services. For example, when the SCS is 15 kHz, a wide area in traditional cellular bands is supported and when the SCS is 30 kHz/60 kHz, dense-urban, lower latency, and wider carrier bandwidth are supported, and when the SCS is more than 60 kHz, a bandwidth larger than 24.25 GHz is supported in order to overcome phase noise.

An NR frequency band is defined as two types of frequency ranges (FR1 and FR2). FR1 and FR2 may be configured as shown in Table 2 below. Further, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in the NR system, a size of various fields in the time domain is expressed as a multiple of a time unit of $T_s = 1/(\Delta f_{max} \cdot N_f)$. In this case, $\Delta f_{max} = 480 \cdot 10^3$, and $N_f = 4096$. DL and UL transmission is configured as a radio frame having a section of $T_f = (\Delta f_{max} N_f / 100) \cdot T_s = 10$ms. The radio frame is composed of ten subframes each having a section of $T_{sf} = (\Delta f_{max} N_f / 1000) \cdot T_s = 1$ms. In this case, there may be a set of UL frames and a set of DL frames.

FIG. 2 illustrates the relation between an uplink frame and a downlink frame in a wireless communication system to which a method proposed in the disclosure may be applied.

As illustrated in FIG. 2, uplink frame number i for transmission from a user equipment (UE) shall start $T_{TA} = N_{TA} T_s$ before the start of a corresponding downlink frame at the corresponding UE.

Regarding the numerology $\mu$, slots are numbered in increasing order of $n_s^{\mu} \in \left\{ 0, ..., N_{subframe}^{slots, \mu} - 1 \right\}$ within a subframe and are numbered in increasing order of $n_{s,f}^{\mu} \in \left\{ 0, ..., N_{frame}^{slots, \mu} - 1 \right\}$ within a radio frame. One slot consists of $N_{symb}^{\mu}$ consecutive OFDM symbols of $N_{symb}^{\mu}$, and $N_{symb}^{\mu}$ is determined depending on a numerology used and slot configuration. The start of slots $n_s^{\mu}$ in a subframe is aligned in time with the start of OFDM symbols $n_s^{\mu} N_{symb}^{\mu}$ in the same subframe.

Not all UEs are able to transmit and receive at the same time, and this means that not all OFDM symbols in a downlink slot or an uplink slot are available to be used.

Table 3 represents the number $N_{symb}^{slot}$ of OFDM symbols per slot, the number $N_{slot}^{frame, \mu}$ of slots per radio frame, and the number $N_{slot}^{subframe,\mu}$ of slots per subframe in a normal CP. Table 4 represents the number of OFDM symbols per slot, the number of slots per radio frame, and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

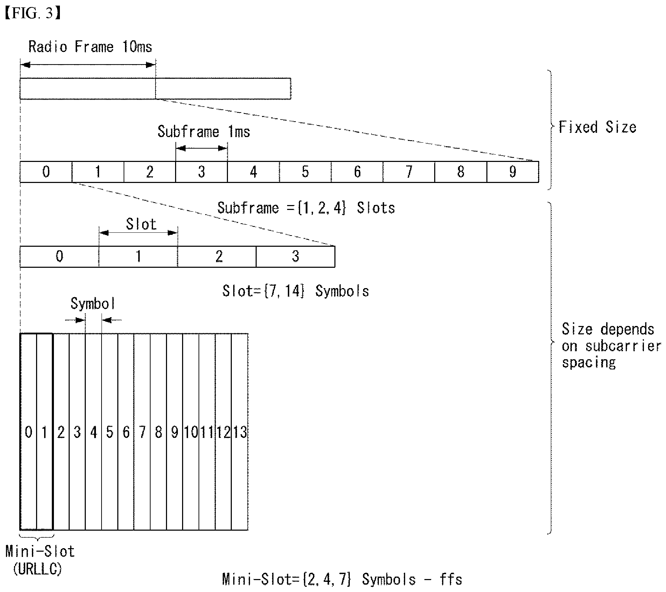

FIG. 3 illustrates an example of a frame structure in a NR system. FIG. 3 is merely for convenience of explanation and does not limit the scope of the disclosure.

In Table 4, in case of $\mu$ =2, i.e., as an example in which a subcarrier spacing (SCS) is 60 kHz, one subframe (or frame) may include four slots with reference to Table 3, and one subframe = { 1, 2, 4} slots shown in FIG. 3, for example, the number of slot(s) that may be included in one subframe may be defined as in Table 3.

Further, a mini-slot may consist of 2, 4, or 7 symbols, or may consist of more symbols or less symbols.

In relation to physical resources in the NR system, an antenna port, a resource grid, a resource element, a resource block, a carrier part, etc., may be considered.

Hereinafter, the above physical resources that may be considered in the NR system are described in more detail.

First, in relation to an antenna port, the antenna port is defined so that a channel over which a symbol on an antenna port is conveyed may be inferred from a channel over which another symbol on the same antenna port is conveyed. When large-scale properties of a channel over which a symbol on one antenna port is conveyed may be inferred from a channel over which a symbol on another antenna port is conveyed, the two antenna ports may be regarded as being in a quasi co-located or quasi co-location (QC/QCL) relation. In this case, the large-scale properties may include at least one of delay spread, Doppler spread, frequency shift, average received power, and received timing.

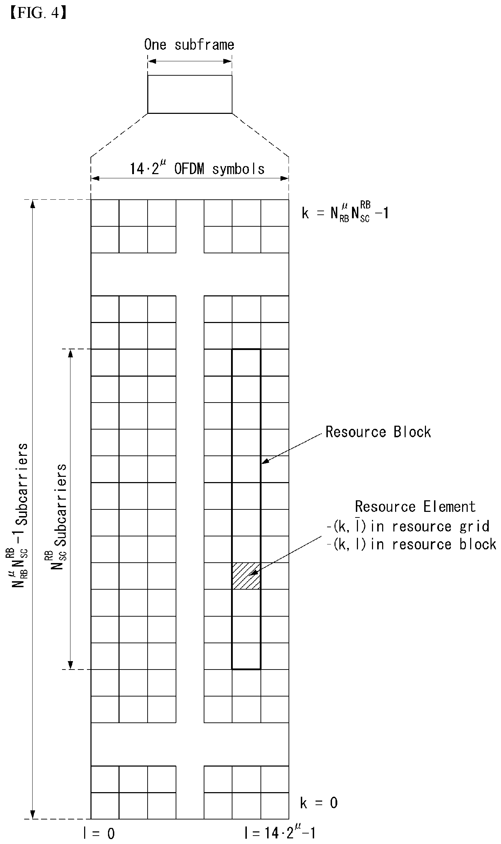

FIG. 4 illustrates an example of a resource grid supported in a wireless communication system to which a method proposed in the disclosure may be applied.

Referring to FIG. 4, a resource grid consists of $N_{RB}^{\mu} N_{sc}^{RB}$ subcarriers on a frequency domain, each subframe consisting of 14·2$\mu$ OFDM symbols, but the disclosure is not limited thereto.

In the NR system, a transmitted signal is described by one or more resource grids, consisting of $N_{RB}^{\mu} N_{sc}^{RB}$ subcarriers, and $2^{\mu} N_{symb}^{(\mu)}$ OFDM symbols, where $N_{RB}^{\mu} \le N_{RB}^{max,\mu}$. $N_{RB}^{max,\mu}$ denotes a maximum transmission bandwidth and may change not only between numerologies but also between uplink and downlink.

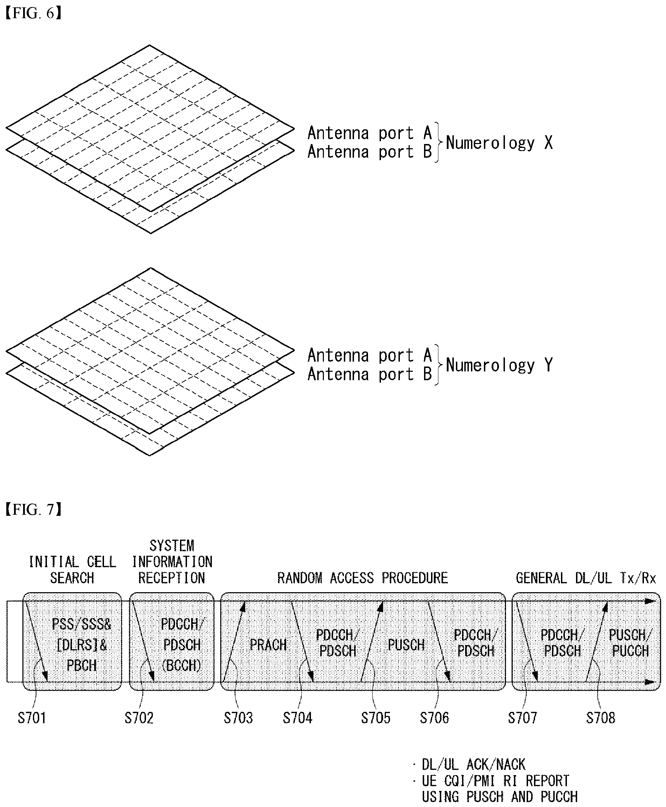

In this case, as illustrated in FIG. 6, one resource grid may be configured per numerology $\mu$ and antenna port p.

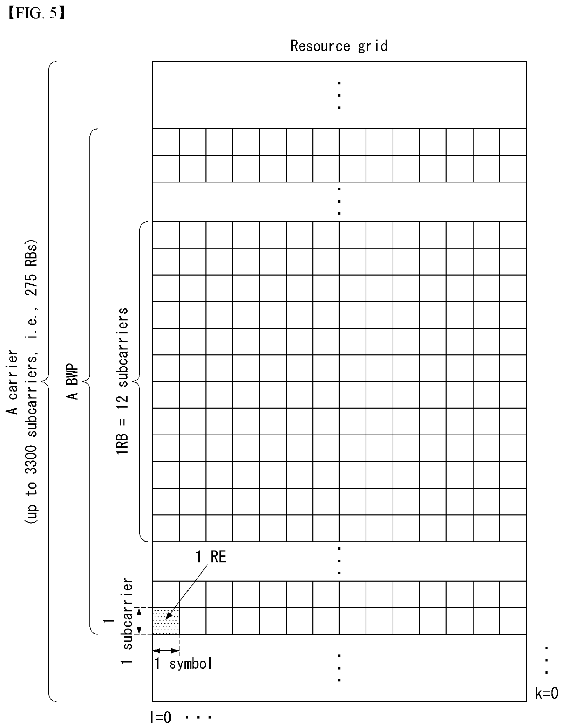

FIG. 5 illustrates a slot structure of an NR frame to which a method described in the present disclosure is applicable.

A slot includes a plurality of symbols in a time domain. For example, one slot includes 7 symbols in a normal CP, while one slot includes 6 symbols in an extended CP. A carrier includes a plurality of subcarriers in a frequency domain. A resource block (RB) is defined as a plurality of (e.g., 12) consecutive subcarriers in the frequency domain. A bandwidth part (BWP) is defined as a plurality of consecutive (P)RBs in the frequency domain and may correspond to one numerology (e.g., SCS, CP length, etc.). The carrier may include up to N (e.g., 5) BWPs. The data communication may be performed through an activated BWP, and only one BWP may be activated in one UE. In a resource grid, each element is referred to as a resource element (RE), and one complex symbol may be mapped to each RE.

FIG. 6 illustrates examples of a resource grid per antenna port and numerology to which a method proposed in the disclosure is applicable.

Each element of the resource grid for the numerology $\mu$ and the antenna port p is called a resource element

$$k = 0,..., N_{RB}^{\mu} N_{sc}^{RB} - 1$$

and is uniquely identified by an index pair $(k,\bar{l})$, where is an index on a frequency domain, and

$$\bar{l} = 0,...,2^{\mu} N_{symb}^{(\mu)} - 1$$

refers to a location of a symbol in a subframe. The index pair $(k,l)$ is used to refer to a resource

$$l = 0,...,N_{symb}^{\mu} - 1$$

element in a slot, where .

The resource element $(k,\bar{l})$ for the numerology $\mu$ and the antenna port p corresponds to a complex value

$$a_{k,\bar{l}}^{(p,\mu)}$$

. When there is no risk for confusion or when a specific antenna port or numerology is not specified, the indexes p and $\mu$ may be dropped, and as a result, the complex value may be $a_{k,\bar{l}}^{(p)}$ or $a_{k,\bar{l}}$.

Further, a physical resource block is defined as $N_{sc}^{RB} = 12$ consecutive subcarriers in the frequency domain.

Point A serves as a common reference point of a resource block grid and may be obtained as follows.

offsetToPointA for PCell downlink represents a frequency offset between the point A and a lowest subcarrier of a lowest resource block that overlaps a SS/PBCH block used by the UE for initial cell selection, and is expressed in units of resource blocks assuming 15 kHz subcarrier spacing for FR1 and 60 kHz subcarrier spacing for FR2; absoluteFrequencyPointA represents frequency-location of the point A expressed as in absolute radio-frequency channel number (ARFCN).

The common resource blocks are numbered from 0 and upwards in the frequency domain for subcarrier spacing configuration .

The center of subcarrier 0 of common resource block 0 for the subcarrier spacing configuration $\mu$ coincides with 'point A'. A common resource block number $n_{CRB}^{\mu}$ in the frequency domain and resource elements (k, l) for the subcarrier spacing configuration $\mu$ may be given by the following Equation 1.

【Equation 1】

$$n_{CRB}^{\mu} = \left\lfloor \frac{k}{N_{sc}^{RB}} \right\rfloor$$

Here, $k$ may be defined relative to the point A so that $k = 0$ corresponds to a subcarrier centered around the point A. Physical resource blocks are defined within a bandwidth part (BWP) and are numbered from 0 to $N_{BWP,i}^{size} - 1$, where $i$ is No. of the BWP. A relation between the physical resource block $n_{pRB}$ in BWP $i$ and the common resource block $n_{CRB}$ may be given by the following Equation 2.

【Equation 2】

$$n_{\mathrm{CRB}} = n_{\mathrm{PRB}} + N_{\mathrm{BWP},i}^{\mathrm{start}}$$

Here, $N_{\mathrm{BWP},i}^{\mathrm{start}}$ may be the common resource block where the BWP starts relative to the common resource block 0.

## Physical Channel and General Signal Transmission

FIG. 7 illustrates physical channels and general signal transmission used in a 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S701). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. The UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S702).

Meanwhile, when there is no radio resource first accessing the eNB or for signal transmission, the UE may perform a Random Access Procedure (RACH) to the eNB (S703 to S706). To this end, the UE may transmit a specific sequence to a preamble through a Physical Random Access Channel (PRACH) (S703 and S705) and receive a response message (Random Access Response (RAR) message) for the preamble through the PDCCH and a corresponding PDSCH. In the case of a contention based RACH, a Contention Resolution Procedure may be additionally performed (S706).

The UE that performs the above procedure may then perform PDCCH/PDSCH reception (S707) and Physical Uplink Shared Channel (PUSCH)/Physical Uplink Control Channel (PUCCH) transmission (S708) as a general uplink/downlink signal transmission procedure. In particular, the UE may receive Downlink Control Information (DCI) through the PDCCH. Here, the DCI may include control information such as resource allocation information for the UE and formats may be differently applied according to a use purpose.

The control information transmitted by the UE to the base station or received by the UE from the base station through the uplink may include a downlink/uplink ACK/NACK signal, a channel quality indicator (CQI), a precoding matrix index (PMI), a rank indicator (RI), etc. The UE may transmit control information, such as CQI/PMI/RI described above, through PUSCH and/or PUCCH.

## Beam Management (BM) Procedure

A beam management (BM) procedure defined in new radio (NR) is described.

The BM procedure, as layer 1 (L1)/layer 2 (L2) procedures for obtaining and maintaining a set of base station (e.g., gNB, TRP, etc.) and/or terminal (e.g., UE) beams available for downlink (DL) and uplink (UL) transmission/reception, may include the following procedures and terms.

- Beam measurement: operation for the base station or the UE to measure the characteristics of a received beamformed signal
- Beam determination: operation for the base station or the UE to select its transmit beam (Tx beam)/receive beam (Rx beam).
- Beam sweeping: operation of covering a space region using the Tx and/or Rx beam for a predetermined time interval in a predetermined manner.
- Beam report: operation for the UE to report information on a beamformed signal based on the beam measurement.

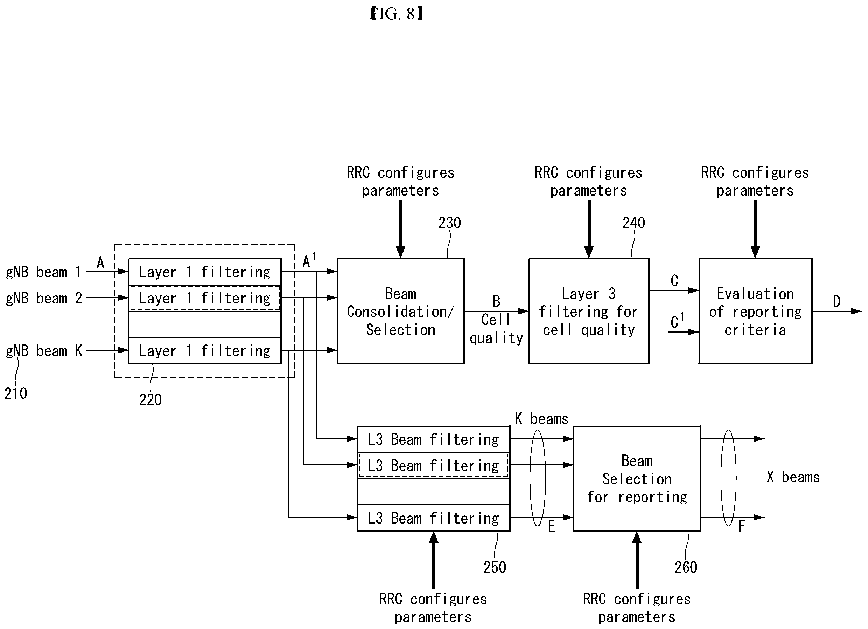

FIG. 8 is a concept view illustrating an example of a beam-related measurement model.

For beam measurement, an SS block (or SS/PBCH block (SSB)) or a channel state information-reference signal (CSI-RS) is used in the downlink, and a sounding reference signal (SRS) is used in the uplink.

In RRC_CONNECTED, a UE measures multiple beams (or at least one beam) of a cell, and the UE may average measurement results (RSRP, RSRQ, SINR, etc.) to derive the cell quality.

Through this, the UE may be configured to consider a sub-set of the detected beam(s).

Beam measurement-related filtering takes place at two different levels (at the physical layer to derive beam quality and then at RRC level to derive cell quality from multiple beams).

The cell quality from beam measurement is derived in the same way for serving cell(s) and for non-serving cell(s).

If the UE is configured by a gNB to report the measurement results for specific beam(s), measurement reports include measurement results for X best beams. The beam measurement result may be reported as L1-reference signal received power (RSRP).

In FIG. 8, K beams (gNB beam 1, gNB beam 2, ..., gNB beam k) 210 correspond to the measurements on synchronization signal (SS) block (SSB) or CSI-RS resources configured for L3 mobility by the gNB and detected by the UE at L1.

In FIG. 8, layer 1 filtering 220 denotes internal layer 1 filtering of inputs measured at point A.

Further, in beam consolidation/selection 230, beam-specific measurements are consolidated (or merged) to derive cell quality.

Layer 3 filtering 240 for cell quality denotes filtering performed on measurements provided at point B.

The UE evaluates reporting criteria whenever new measurement results are reported at least at points C and C1.

D corresponds to measurement report information (message) transmitted at a radio interface.

In L3 beam filtering 250, filtering is performed on measurements (beam-specific measurement) provided at point A1.

In beam selection 260 for beam report, X measurement values are selected in measurements provided at point E.

F denotes beam measurement information included in measurement report (sent) on the radio interface.

The BM procedure may be divided into (1) a DL BM procedure using synchronization signal (SS)/physical broadcast channel (PBCH) block or CSI-RS, and (2) an UL BM procedure using a sounding reference signal (SRS).

Further, each BM procedure may include Tx beam sweeping for determining the Tx beam and RX beam sweeping for determining the Rx beam.

DL BM Procedure

A DL BM procedure is first described.

The DL BM procedure may include (1) transmission for beamformed DL reference signals (RSs) (e.g., CSI-RS or SS block (SSB)) of a base station, and (2) beam reporting of a UE.

The beam reporting may include preferred DL RS identifier(s) (ID) and its corresponding L1-reference signal received power (RSRP).

The DL RS ID may be a SSB resource indicator (SSBRI) or a CSI-RS resource Indicator (CRI).

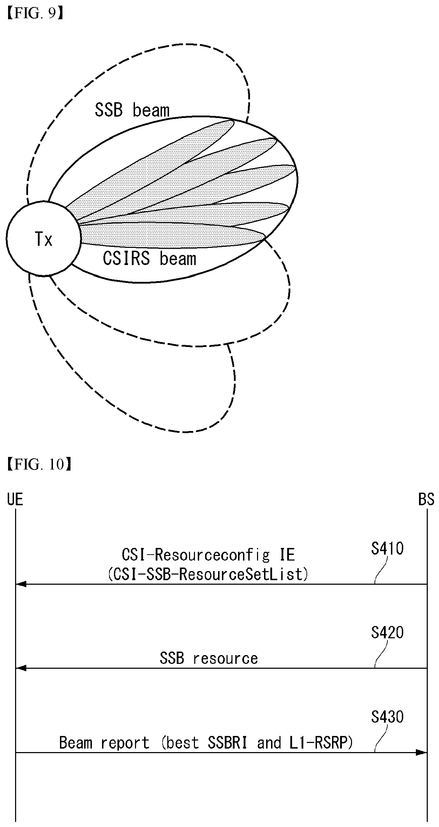

FIG. 9 illustrates an example of a DL BM procedure related Tx beam.

As illustrated in FIG. 9, a SSB beam and a CSI-RS beam may be used for beam measurement.

A measurement metric is L1-RSRP per resource/block.

The SSB may be used for coarse beam measurement, and the CSI-RS may be used for fine beam measurement.

The SSB may be used for both Tx beam sweeping and Rx beam sweeping.

The Rx beam sweeping using the SSB may be performed while the UE changes Rx beam for the same SSBRI across multiple SSB bursts.

One SS burst includes one or more SSBs, and one SS burst set includes one or more SSB bursts.

DL BM Procedure using SSB

FIG. 10 is a flow chart illustrating an example of a DL BM procedure using a SSB.

The configuration for beam report using a SSB is performed upon CSI/beam configuration in a RRC connected state (or RRC connected mode).

As shown in CSI-ResourceConfig IE of Table 5, the BM configuration using the SSB is not separately defined and configures the SSB like CSI-RS resource.

Table 5 represents an example of CSI-ResourceConfig IE.

【Table 5】

```
-- ASN1START

-- TAG-CSI-RESOURCECONFIG-START


CSI-ResourceConfig ::=              SEQUENCE {
    csi-ResourceConfigId              CSI-ResourceConfigId,
    csi-RS-ResourceSetList            CHOICE {
```

```
        nzp-CSI-RS-SSB                  SEQUENCE {
            nzp-CSI-RS-ResourceSetList      SEQUENCE (SIZE (1..maxNrofNZP-CSI-RS-
ResourceSetsPerConfig)) OF NZP-CSI-RS-ResourceSetId OPTIONAL,
            csi-SSB-ResourceSetList         SEQUENCE (SIZE (1..maxNrofCSI-SSB-
ResourceSetsPerConfig)) OF CSI-SSB-ResourceSetId   OPTIONAL
        },
        csi-IM-ResourceSetList          SEQUENCE (SIZE (1..maxNrofCSI-IM-
ResourceSetsPerConfig)) OF CSI-IM-ResourceSetId
    },


    bwp-Id                          BWP-Id,
    resourceType                    ENUMERATED { aperiodic, semiPersistent, periodic },
    ...
}


-- TAG-CSI-RESOURCECONFIGTOADDMOD-STOP

-- ASN1STOP
```

In Table 5, csi-SSB-ResourceSetList parameter denotes a list of SSB resources used for the beam management and reporting in one resource set.

A UE receives, from the base station, CSI-ResourceConfig IE including CSI-SSB-ResourceSetList including SSB resources used for the BM, in S410.

The SSB resource set may be configured as {SSBx1, SSBx2, SSBx3, SSBx4, ...}.

The SSB index may be defined from 0 to 63.

The UE receives the SSB resource from the base station based on the CSI-SSB-ResourceSetList, in S420.

If CSI-RS reportConfig related to a report for SSBRI and L1-RSRP is configured, the UE (beam-)reports the best SSBRI and its corresponding L1-RSRP to the base station, in S430.

That is, if reportQuantity of the CSI-RS reportConfig IE is set to 'ssb-Index-RSRP', the UE reports the best SSBRI and its corresponding L1-RSRP to the base station.

In addition, if the UE is configured with the CSI-RS resource in the same OFDM symbol(s) as SSB (SS/PBCH Block), and 'QCL-TypeD' is applicable, the UE may assume that the CSI-RS and the SSB are quasi co-located in terms of 'QCL-TypeD'.

The QCL TypeD may mean that the antenna ports are QCLed in terms of spatial Rx parameter. The same Rx beam may be applied when the UE receives a plurality of DL antenna ports with the QCL Type D relation.

Further, the UE does not expect that the CSI-RS is configured in an RE overlapping an RE of the SSB.

DL BM Procedure using CSI-RS

If a UE is configured with a NZP-CSI-RS-ResourceSet configured with the (higher layer parameter) repetition set to 'ON', the UE may assume that at least one CSI-RS resource within the NZP-CSI-RS-ResourceSet is transmitted with the same downlink spatial domain transmission filter.

That is, the at least one CSI-RS resource within the NZP-CSI-RS-ResourceSet is transmitted through the same Tx beam.

In this case, the at least one CSI-RS resource within the NZP-CSI-RS-ResourceSet may be transmitted in different OFDM symbols or may be transmitted in different frequency domains (i.e., through FDM).

A case where the at least one CSI-RS resource is FDMed is a case where a UE is a multi-panel UE.

Further, a case where the repetition is set to 'ON' is related to an Rx beam sweeping procedure of the UE.

The UE does not expect to receive different periodicities in periodicityAndOffset in all CSI-RS resources within NZP-CSI-RS-Resourceset.

If the repetition is set to 'OFF', the UE does not assume that at least one CSI-RS resource within NZP-CSI-RS-ResourceSet is transmitted with the same downlink spatial domain transmission filter.

That is, the at least one CSI-RS resource within NZP-CSI-RS-ResourceSet is transmitted through different Tx beams.

A case where the repetition is set to 'OFF' is related to a Tx beam sweeping procedure of a base station.

Further, the repetition parameter may be configured only with respect to CSI-RS resource sets associated with CSI-ReportConfig having the report of L1 RSRP or 'No Report (or None)'.

If the UE is configured with a CSI-ReportConfig with reportQuantity set to 'cri-RSRP' or 'none' and if the CSI-ResourceConfig for channel measurement (higher layer parameter resourcesForChannelMeasurement) contains a NZP-CSI-RS-ResourceSet that is configured with the higher layer parameter 'repetition' (repetition=ON) and without the higher layer parameter 'trs-Info', the UE can only be configured with the same number of ports (1-port or 2-port) with the higher layer parameter 'nrofPorts' for all CSI-RS resources within the NZP-CSI-RS-ResourceSet.

More specifically, uses of CSI-RS are described. If a repetition parameter is configured in a specific CSI-RS resource set and TRS_info is not configured, a CSI-RS is used for beam management.

Further, if a repetition parameter is not configured and TRS_info is configured, a CSI-RS is used for a tracking reference signal (TRS).

Furthermore, if a repetition parameter is not configured and TRS_info is not configured, a CSI-RS is used for CSI acquisition.

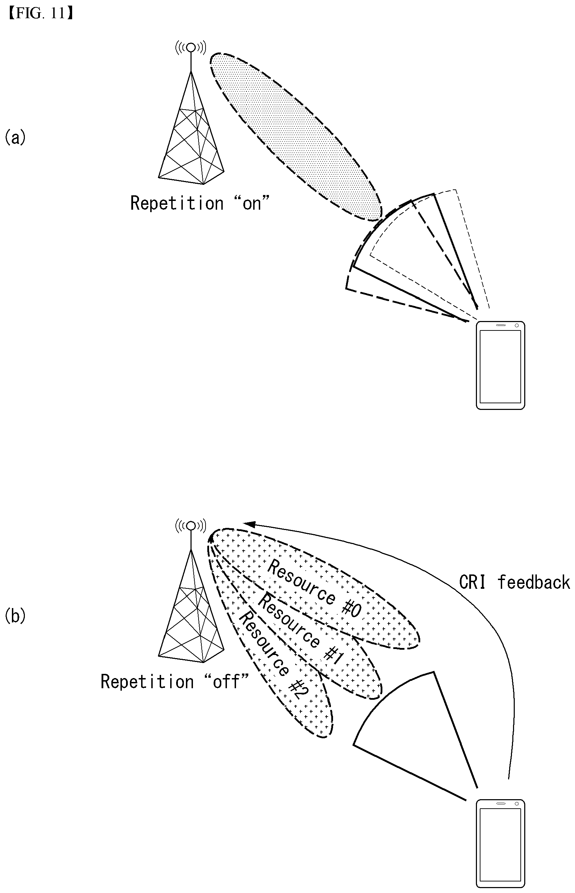

FIG. 11 illustrates an example of a DL BM procedure using a CSI-RS.

In FIG. 11, (a) illustrates an Rx beam determination (or refinement) procedure of a UE, and (b) illustrates a Tx beam determination procedure of a base station.

More specifically, FIG. 11(a) illustrates when a repetition parameter is set to 'ON', and FIG. 11(b) illustrates when a repetition parameter is set to 'OFF'.

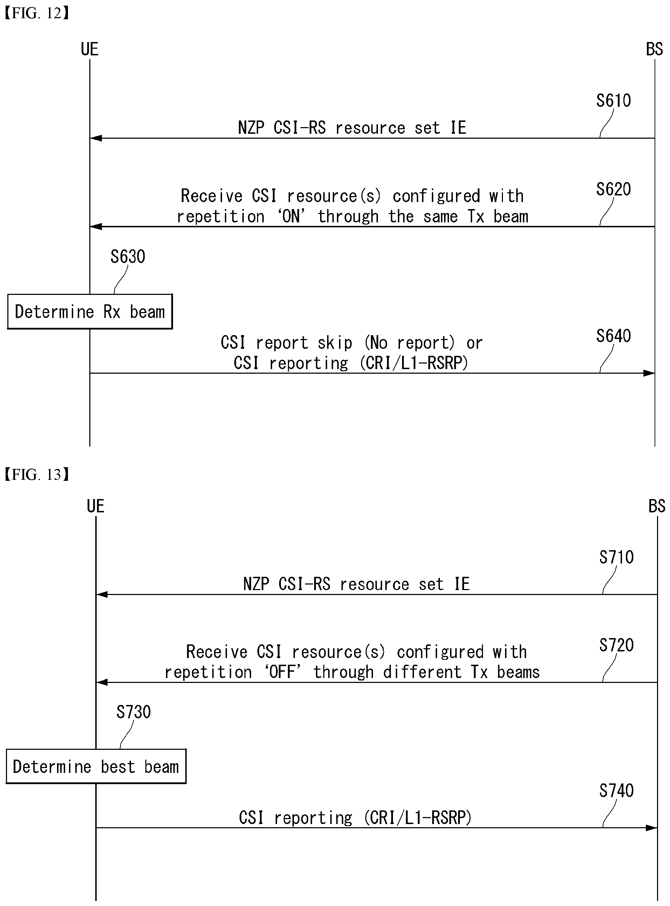

An Rx beam determination process of the UE is described with reference to FIGS. 11(a) and 12.

FIG. 12 is a flow chart illustrating an example of a receive (Rx) beam determination process of a UE.

A UE receives, from a base station, a NZP CSI-RS resource set IE including a higher layer parameter repetition via RRC signaling, in S610.

Here, the repetition parameter is set to 'ON'.

The UE repeatedly receives resource(s) within a CSI-RS resource set configured with repetition 'ON' in different OFDM symbols through the same Tx beam (or DL spatial domain transmission filter) of the base station, in S620.

Through this, the UE determines its Rx beam, in S630.

Here, the UE skips a CSI report or transmits a CSI report including CRI/L1-RSRP to the base station, in S640.

In this case, reportQuantity of CSI report config may be set to 'No report (or None)' or 'CRI + L1-RSRP'.

That is, if the UE is configured with the repetition 'ON', the UE may skip the CSI report or may report ID information (CRI) for a beam pair related preferred beam and its quality value (L1-RSRP).

A Tx beam determination process of the base station is described with reference to FIGS. 11(b) and 13.

FIG. 13 is a flow chart illustrating an example of a transmit (Tx) beam determination process of a base station.

A UE receives, from a base station, a NZP CSI-RS resource set IE including a higher layer parameter repetition via RRC signaling, in S710.

Here, the repetition parameter is set to 'OFF' and is related to the Tx beam sweeping procedure of the base station.

The UE receives resources within a CSI-RS resource set configured with repetition 'OFF' via different Tx beams (DL spatial domain transmission filter) of the base station, in S720.

The UE selects (or determines) the best beam in S740, and reports an ID and relevant quality information (e.g., L1-RSRP) for the selected beam to the base station in S740.

In this case, reportQuantity of CSI report config may be set to 'CRI + L1-RSRP'.

That is, if the CSI-RS is transmitted for the BM, the UE reports CRI and L1-RSRP therefor to the base station.

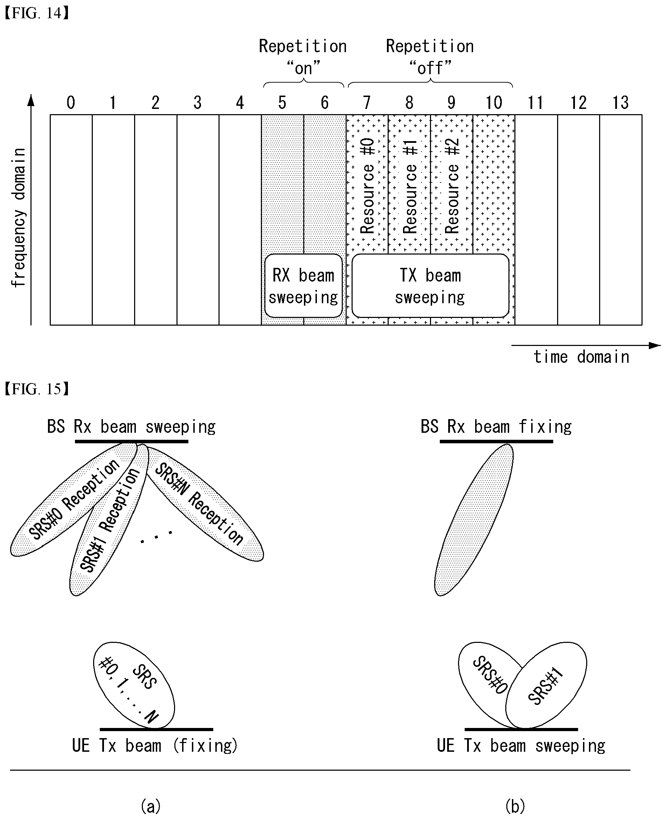

FIG. 14 illustrates an example of resource allocation in a time domain and a frequency domain related to the operation of FIG. 11.

That is, if repetition 'ON' is configured in a CSI-RS resource set, a plurality of CSI-RS resources may apply the same Tx beam and may be repeatedly used, and if repetition 'OFF' is configured in the CSI-RS resource set, different CSI-RS resources may be transmitted via different Tx beams.

DL BM related beam indication

A UE may be RRC-configured with a list of up to M candidate transmission configuration indication (TCI) states at least for the purpose of quasi co-location (QCL) indication, where M may be 64.

Each TCI state may be configured with one RS set.

Each ID of DL RS at least for the purpose of spatial QCL (QCL Type D) in an RS set may refer to one of DL RS types such as SSB, P-CSI RS, SP-CSI RS, A-CSI RS, etc.

Initialization/update of the ID of DL RS(s) in the RS set used at least for the purpose of spatial QCL may be performed at least via explicit signaling.

Table 6 represents an example of TCI-State IE.

The TCI-State IE associates one or two DL reference signals (RSs) with corresponding quasi co-location (QCL) types.

【Table 6】

```
-- ASN1START

-- TAG-TCI-STATE-START


TCI-State ::=                    SEQUENCE {
    tci-StateId                      TCI-StateId,
    qcl-Type1                        QCL-Info,
    qcl-Type2                        QCL-Info
    ...
}


QCL-Info ::=                     SEQUENCE {
    cell                             ServCellIndex
    bwp-Id                           BWP-Id
    referenceSignal                  CHOICE {
        csi-rs                           NZP-CSI-RS-ResourceId,
        ssb                              SSB-Index
```

```
        },
        qcl-Type                              ENUMERATED {typeA, typeB, typeC, typeD},
        ...
    }


    -- TAG-TCI-STATE-STOP
    -- ASN1STOP
```

In Table 6, bwp-Id parameter denotes a DL BWP where the RS is located, cell parameter denotes a carrier where the RS is located, and reference Signal parameter denotes reference antenna port(s) which is a source of quasi co-location for corresponding target antenna port(s) or a reference signal including the one. The target antenna port(s) may be CSI-RS, PDCCH DMRS, or PDSCH DMRS. As an example, in order to indicate QCL reference RS information on NZP CSI-RS, the corresponding TCI state ID may be indicated to NZP CSI-RS resource configuration information. As another example, in order to indicate QCL reference information on PDCCH DMRS antenna port(s), the TCI state ID may be indicated to each CORESET configuration. As another example, in order to indicate QCL reference information on PDSCH DMRS antenna port(s), the TCI state ID may be indicated via DCI.

Quasi-Co Location (QCL)

The antenna port is defined so that a channel over which a symbol on an antenna port is conveyed can be inferred from a channel over which another symbol on the same antenna port is conveyed. When properties of a channel over which a symbol on one antenna port is conveyed can be inferred from a channel over which a symbol on another antenna port is conveyed, the two antenna ports may be considered as being in a quasi co-located or quasi co-location (QC/QCL) relationship.

The channel properties include one or more of delay spread, Doppler spread, frequency shift, average received power, received timing, and spatial RX parameter. The spatial Rx parameter means a spatial (reception) channel property parameter such as an angle of arrival.

The UE may be configured with a list of up to M TCI-State configurations within the higher layer parameter PDSCH-Config to decode PDSCH according to a detected PDCCH with DCI intended for the corresponding UE and a given serving cell, where M depends on UE capability.

Each TCI-State contains parameters for configuring a quasi co-location relationship between one or two DL reference signals and the DM-RS ports of the PDSCH.

The quasi co-location relationship is configured by the higher layer parameter qcl-Type 1 for the first DL RS and qcl-Type2 for the second DL RS (if configured).

For the case of two DL RSs, the QCL types are not be the same, regardless of whether the references are to the same DL RS or different DL RSs.

The quasi co-location types corresponding to each DL RS are given by the higher layer parameter qcl-Type of QCL-Info and may take one of the following values:

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, if a target antenna port is a specific NZP CSI-RS, the corresponding NZP CSI-RS antenna ports may be indicated/configured to be QCLed with a specific TRS in terms of QCL-TypeA and with a specific SSB in terms of QCL-TypeD. The UE receiving the indication/configuration may receive the corresponding NZP CSI-RS using the Doppler or delay value measured in the QCL-TypeA TRS and apply the Rx beam used for QCL-TypeD SSB reception to the reception of the corresponding NZP CSI-RS reception.

The UE receives an activation command used to map up to eight TCI states to the codepoint of the DCI field 'Transmission Configuration Indication'.

When HARQ-ACK corresponding to the PDSCH carrying the activation command is transmitted in slot n, the indicated mapping between TCI states and codepoints of the DCI field 'Transmission Configuration Indication' may be applied starting from slot n+3Nslotsubframe,μ+1. After a UE receives initial higher layer configuration of TCI states before receiving the activation command, the UE may assume that the DMRS ports of PDSCH of a serving cell are QCLed with the SS/PBCH block determined in the initial access procedure with respect to 'QCL-TypeA', and if applicable, also with respect to 'QCL-TypeD'.

If the higher layer parameter (e.g., tci-PresentInDCI) that is configured for the UE and indicates whether the TCI field within DCI is present is set to 'enabled' for the CORESET scheduling the PDSCH, the UE may assume that the TCI field is present in the DCI format 1_1 of the PDCCH transmitted on the CORESET. If tci-PresentInDCI is not configured for the CORESET scheduling the PDSCH or the PDSCH is scheduled by a DCI format 1_0, and if a time offset between the reception of DL DCI and PDSCH corresponding to this is equal to or greater than a predetermined threshold (e.g., timeDurationForQCL), for determining PDSCH antenna port QCL, the UE may assume that the TCI state or QCL assumption for the PDSCH is identical to the TCI state or QCL assumption applied for the CORESET used for the PDCCH transmission. Here, the predetermined threshold may be based on the reported UE capability.

If the parameter tci-PresentInDCI is set to 'enabled', the TCI field within DCI in a scheduling component carrier (CC) may indicate an activated TCI state of a scheduled CC or DL BWP. When the PDSCH is scheduled by the DCI format 1_1, the UE may use the TCI state based on a value of 'Transmission Configuration Indication' field of the detected PDCCH with DCI, so as to determine the PDSCH antenna port QCL.

If the time offset between the reception of DL DCI and PDSCH corresponding to this is equal to or greater than the predetermined threshold (e.g., timeDurationForQCL), the UE may assume that the DMRS ports of PDSCH of a serving cell are QCLed with the RS(s) in the TCI state with respect to the QCL type parameter(s) given by the indicated TCI state.

If a single slot PDSCH is configured for the UE, the indicated TCI state may be based on an activated TCI state of a slot with the scheduled PDSCH.

If a multi-slot PDSCH is configured for the UE, the indicated TCI state may be based on an activated TCI state of a first slot with the scheduled PDSCH, and the UE may expect that activated TCI states across slots with the scheduled PDSCH are identical.

If the UE is configured with CORESET associated with a search space set for cross-carrier scheduling, the UE may expect that the parameter tci-PresentInDCI with respect to the CORESET is set to 'enabled'. If one or more TCI states are configured for a serving cell scheduled by a search space set including QCL-TypeD, the UE may expect that a time offset between the reception of the PDCCH detected in the search space set and the PDSCH corresponding to this is equal to or greater than the predetermined threshold (e.g., timeDurationForQCL).

For both the cases when the parameter tci-PresentInDCI is set to 'enabled' and the parameter tci-PresentInDCI is not configured in an RRC connection mode, if the offset between the reception of the DL DCI and the corresponding PDSCH is less than the predetermined threshold (e.g., timeDurationForQCL), the UE may assume that the DMRS ports of PDSCH of a serving cell are QCLed with the RS(s) with respect to the QCL parameter(s) used for PDCCH QCL indication of CORESET associated with the monitored search space having the lowest CORESET-ID in the latest slot in which one or more CORESETs within the active BWP of the serving cell are monitored by the UE.

In this case, if QCL-TypeD of the PDSCH DMRS is different from QCL-TypeD of the PDCCH DMRS and they overlap in at least one symbol, the UE may expect that the reception of PDCCH associated with the CORESET is prioritized. This may also be applied for intra-band carrier aggregation (CA) (when the PDSCH and the CORESET are in different CCs). If none of configured TCI states contains 'QCL-TypeD', the UE may obtain the other QCL assumptions from the indicated TCI states for its scheduled PDSCH irrespective of the time offset between the reception of the DL DCI and the corresponding PDSCH.

For a periodic CSI-RS resource in a NZP-CSI-RS-ResourceSet configured with higher layer parameter trs-Info, the UE may expect that a TCI-State indicates one of the following QCL type(s):

- 'QCL-TypeC' with an SS/PBCH block and, when applicable, 'QCL-TypeD' with the same SS/PBCH block, or
- 'QCL-TypeC' with an SS/PBCH block and, when applicable, 'QCL-TypeD' with a CSI-RS resource in an NZP-CSI-RS-ResourceSet configured with higher layer parameter repetition.

For an aperiodic CSI-RS resource in a NZP-CSI-RS-ResourceSet configured with higher layer parameter trs-Info, the UE may expect that a TCI-State indicates 'QCL-TypeA' with a periodic CSI-RS resource in a NZP-CSI-RS-ResourceSet configured with higher layer parameter trs-Info and, when applicable, 'QCL-TypeD' with the same periodic CSI-RS resource.

For a CSI-RS resource in a NZP-CSI-RS-ResourceSet configured without higher layer parameter trs-Info and without the higher layer parameter repetition, the UE may expect that a TCI-State indicates one of the following QCL type(s):

- 'QCL-TypeA' with a CSI-RS resource in a NZP-CSI-RS-ResourceSet configured with higher layer parameter trs-Info and, when applicable, 'QCL-TypeD' with the same CSI-RS resource, or

- 'QCL-TypeA' with a CSI-RS resource in a NZP-CSI-RS-ResourceSet configured with higher layer parameter trs-Info and, when applicable, 'QCL-TypeD' with an SS/PBCH block , or
- 'QCL-TypeA' with a CSI-RS resource in a NZP-CSI-RS-ResourceSet configured with higher layer parameter trs-Info and, when applicable, 'QCL-TypeD' with a CSI-RS resource in a NZP-CSI-RS-ResourceSet configured with higher layer parameter repetition, or
- 'QCL-TypeB' with a CSI-RS resource in a NZP-CSI-RS-ResourceSet configured with higher layer parameter trs-Info when 'QCL-TypeD' is not applicable.

For a CSI-RS resource in a NZP-CSI-RS-ResourceSet configured with higher layer parameter repetition, the UE may expect that a TCI-State indicates one of the following QCL type(s):

- 'QCL-TypeA' with a CSI-RS resource in a NZP-CSI-RS-ResourceSet configured with higher layer parameter trs-Info and, when applicable, 'QCL-TypeD' with the same CSI-RS resource, or
- 'QCL-TypeA' with a CSI-RS resource in a NZP-CSI-RS-ResourceSet configured with higher layer parameter trs-Info and, when applicable, 'QCL-TypeD' with a CSI-RS resource in a NZP-CSI-RS-ResourceSet configured with higher layer parameter repetition, or
- 'QCL-TypeC' with an SS/PBCH block and, when applicable, 'QCL-TypeD' with the same SS/PBCH block.

For the DMRS of PDCCH, the UE may expect that a TCI-State indicates one of the following QCL type(s):

- 'QCL-TypeA' with a CSI-RS resource in a NZP-CSI-RS-ResourceSet configured with higher layer parameter trs-Info and, when applicable, 'QCL-TypeD' with the same CSI-RS resource, or
- 'QCL-TypeA' with a CSI-RS resource in a NZP-CSI-RS-ResourceSet configured with higher layer parameter trs-Info and, when applicable, 'QCL-TypeD' with a CSI-RS resource in an NZP-CSI-RS-ResourceSet configured with higher layer parameter repetition, or
- 'QCL-TypeA' with a CSI-RS resource in a NZP-CSI-RS-ResourceSet configured without higher layer parameter trs-Info and without higher layer parameter repetition and, when applicable, 'QCL-TypeD' with the same CSI-RS resource.

For the DMRS of PDSCH, the UE may expect that a TCI-State indicates one of the following QCL type(s):

- 'QCL-TypeA' with a CSI-RS resource in a NZP-CSI-RS-ResourceSet configured with higher layer parameter trs-Info and, when applicable, 'QCL-TypeD' with the same CSI-RS resource, or
- 'QCL-TypeA' with a CSI-RS resource in a NZP-CSI-RS-ResourceSet configured with higher layer parameter trs-Info and, when applicable, 'QCL-TypeD' with a CSI-RS resource in an NZP-CSI-RS-ResourceSet configured with higher layer parameter repetition, or
- 'QCL-TypeA' with CSI-RS resource in a NZP-CSI-RS-ResourceSet configured without higher layer parameter trs-Info and without repetition and, when applicable, 'QCL-TypeD' with the same CSI-RS resource.

UL BM Procedure

A UL BM may be configured such that beam reciprocity (or beam correspondence) between a Tx beam and an Rx beam is established or not established depending on the UE implementation. If the beam reciprocity between the Tx beam and the Rx beam is established in both a base station and a UE, a UL beam pair may be adjusted via a DL beam pair. However, if the beam reciprocity between the Tx beam and the Rx beam is not established in any one of the base station and the UE, a process of determining the UL beam pair is necessary separately from the DL beam pair determination.

Even if both the base station and the UE maintain the beam correspondence, the base station may use a UL BM procedure for determining the DL Tx beam even if the UE does not request a report of a (preferred) beam.

The UM BM may be performed via beamformed UL SRS transmission, and whether to apply UL BM of a SRS resource set is configured by the (higher layer parameter) usage. If the usage is set to 'BeamManagement (BM)', only one SRS resource may be transmitted to each of a plurality of SRS resource sets in a given time instant.

The UE may be configured with one or more sounding reference symbol (SRS) resource sets configured by (higher layer parameter) SRS-ResourceSet (via higher layer signaling, RRC signaling, etc.). For each SRS resource set, the UE may be configured with K≥1 SRS resources (higher later parameter SRS-resource), where K is a natural number, and a maximum value of K is indicated by SRS_capability.

In the same manner as the DL BM, the UL BM procedure may be divided into a UE's Tx beam sweeping and a base station's Rx beam sweeping.

FIG. 15 illustrates an example of an UL BM procedure using a SRS. More specifically, FIG. 15(a) illustrates an Rx beam determination procedure of a base station, and FIG. 15(a) illustrates a Tx beam sweeping procedure of a UE.

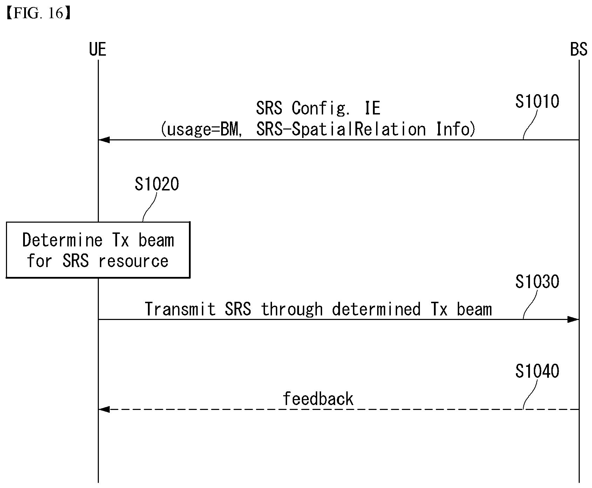

FIG. 16 is a flow chart illustrating an example of an UL BM procedure using a SRS.

- The UE receives, from the base station, RRC signaling (e.g., SRS-Config IE) including (higher layer parameter) usage parameter set to 'beam management' in S1010.

Table 7 represents an example of SRS-Config information element (IE), and the SRS-Config IE is used for SRS transmission configuration. The SRS-Config IE contains a list of SRS-Resources and a list of SRS-Resource sets. Each SRS resource set means a set of SRS resources.

The network may trigger transmission of the SRS resource set using configured aperiodicSRS-ResourceTrigger (L1 DCI).

【Table 7】

```
-- ASN1START
-- TAG-MAC-CELL-GROUP-CONFIG-START


SRS-Config ::=                        SEQUENCE {
    srs-ResourceSetToReleaseList          SEQUENCE (SIZE(1..maxNrofSRS-ResourceSets))
OF SRS-ResourceSetId       OPTIONAL,      -- Need N
    srs-ResourceSetToAddModList           SEQUENCE (SIZE(1..maxNrofSRS-ResourceSets))
OF SRS-ResourceSet         OPTIONAL,      -- Need N


    srs-ResourceToReleaseList             SEQUENCE (SIZE(1..maxNrofSRS-Resources)) OF
SRS-ResourceId             OPTIONAL,      -- Need N
    srs-ResourceToAddModList              SEQUENCE (SIZE(1..maxNrofSRS-Resources)) OF
SRS-Resource               OPTIONAL,      -- Need N


    tpc-Accumulation                      ENUMERATED {disabled}

    ...
}


SRS-ResourceSet ::=                   SEQUENCE {
    srs-ResourceSetId                     SRS-ResourceSetId,
    srs-ResourceIdList                    SEQUENCE (SIZE(1..maxNrofSRS-
ResourcesPerSet)) OF SRS-ResourceId       OPTIONAL,      -- Cond Setup


    resourceType                          CHOICE {
        aperiodic                             SEQUENCE {
            aperiodicSRS-ResourceTrigger          INTEGER (1..maxNrofSRS-TriggerStates-
1),
            csi-RS                                NZP-CSI-RS-ResourceId
            slotOffset                            INTEGER (1..32)
```

```
                    ...
          },
          semi-persistent                    SEQUENCE {
              associatedCSI-RS                   NZP-CSI-RS-ResourceId

              ...
          },
          periodic                           SEQUENCE {
              associatedCSI-RS                   NZP-CSI-RS-ResourceId

              ...
          }
      },
      usage                                  ENUMERATED {beamManagement, codebook,
nonCodebook, antennaSwitching},
      alpha                                  Alpha
      p0                                     INTEGER (-202..24)
      pathlossReferenceRS                    CHOICE {
          ssb-Index                              SSB-Index,
          csi-RS-Index                           NZP-CSI-RS-ResourceId



SRS-SpatialRelationInfo ::=     SEQUENCE {
      servingCellId                          ServCellIndex
      OPTIONAL,      -- Need S
      referenceSignal                        CHOICE {
          ssb-Index                              SSB-Index,
          csi-RS-Index                           NZP-CSI-RS-ResourceId,
          srs                                    SEQUENCE {
              resourceId                             SRS-ResourceId,
              uplinkBWP                              BWP-Id
          }
      }
}



SRS-ResourceId ::=                           INTEGER (0..maxNrofSRS-Resources-1)
```

In Table 7, usage refers to a higher layer parameter to indicate whether the SRS resource set is used for beam management or is used for codebook based or non-codebook based transmission. The usage parameter corresponds to L1 parameter 'SRS-SetUse'. 'spatialRelationInfo' is a parameter representing a configuration of spatial relation between a reference RS and a target SRS. The reference RS may be SSB, CSI-RS, or SRS which corresponds to L1 parameter 'SRS-SpatialRelationInfo'. The usage is configured per SRS resource set.

- The UE determines the Tx beam for the SRS resource to be transmitted based on SRS-SpatialRelation Info contained in the SRS-Config IE in S1020. The SRS-SpatialRelation Info is configured per SRS resource and indicates whether to apply the same beam as the beam used for SSB, CSI-RS, or SRS per SRS resource. Further, SRS-SpatialRelationInfo may be configured or not configured in each SRS resource.
- If the SRS-SpatialRelationInfo is configured in the SRS resource, the same beam as the beam used for SSB, CSI-RS or SRS is applied for transmission. However, if the SRS-SpatialRelationInfo is not configured in the SRS resource, the UE randomly determines the Tx beam and transmits the SRS through the determined Tx beam in S1030.

More specifically, for P-SRS with 'SRS-ResourceConfigType' set to 'periodic':

i) if SRS-SpatialRelationInfo is set to 'SSB/PBCH', the UE transmits the corresponding SRS resource with the same spatial domain transmission filter (or generated from the corresponding filter) as the spatial domain Rx filter used for the reception of the SSB/PBCH; or
ii) if SRS-SpatialRelationInfo is set to 'CSI-RS', the UE transmits the SRS resource with the same spatial domain transmission filter used for the reception of the periodic CSI-RS or SP CSI-RS; or
iii) if SRS-SpatialRelationInfo is set to 'SRS', the UE transmits the SRS resource with the same spatial domain transmission filter used for the transmission of the periodic SRS.

Even if 'SRS-ResourceConfigType' is set to 'SP-SRS' or 'AP-SRS', the beam determination and transmission operations may be applied similar to the above.

- Additionally, the UE may receive or may not receive feedback for the SRS from the base station, as in the following three cases in S 1040.

i) If Spatial_Relation_Info is configured for all the SRS resources within the SRS resource set, the UE transmits the SRS with the beam indicated by the base station. For example, if the Spatial_Relation_Info indicates all the same SSB, CRI, or SRI, the UE repeatedly transmits the SRS with the same beam. This case corresponds to FIG. 15(a) as the usage for the base station to select the Rx beam.
ii) The Spatial_Relation_Info may not be configured for all the SRS resources within the SRS resource set. In this case, the UE may perform transmission while freely changing SRS beams. That is, this case corresponds to FIG. 15(b) as the usage for the UE to sweep the Tx beam.
iii) The Spatial_Relation_Info may be configured for only some SRS resources within the SRS resource set. In this case, the UE may transmit the configured SRS resources with the indicated beam, and transmit the SRS resources, for which Spatial_Relation_Info is not configured, by randomly applying the Tx beam.

**Downlink Transmission and Reception Operation**

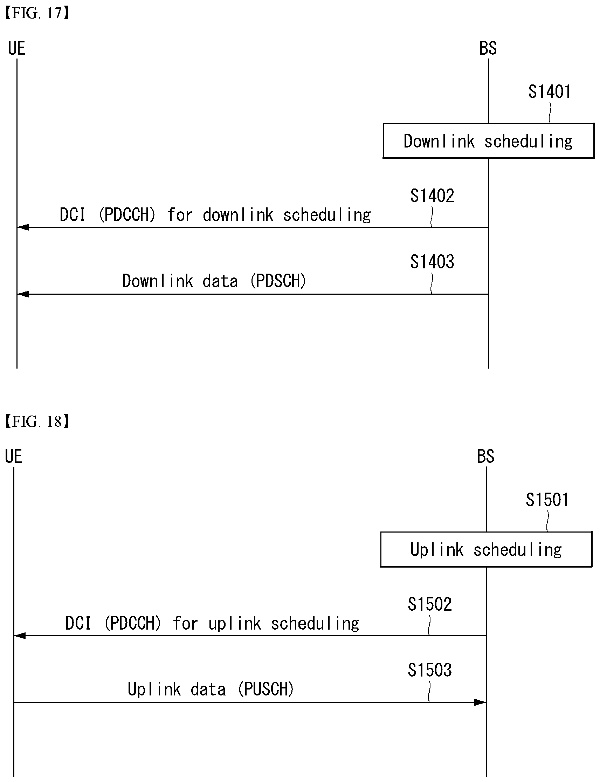

FIG. 17 illustrates an example of downlink transmission and reception operation.

- Referring to FIG. 17, a base station schedules downlink transmission such as frequency/time resource, transmission layer, downlink precoder, and MCS in S1401. In particular, the base station may determine a beam for PDSCH transmission to a UE through the operations described above.
- The UE receives, from the base station, downlink control information (DCI) for downlink scheduling (i.e., including scheduling information of PDSCH) on a PDCCH in S1402.

DCI format 1_0 or 1_1 may be used for downlink scheduling, and the DCI format 1_1 particularly includes the following information: an identifier for DCI formats, a bandwidth part indicator, frequency domain resource assignment, time domain resource assignment, a PRB bundling size indicator, a rate matching indicator, ZP CSI-RS trigger, antenna port(s), a transmission configuration indication (TCI), SRS request, and demodulation reference signal (DMRS) sequence initialization.
In particular, based on each state indicated in an antenna port(s) field, the number of DMRS ports may be scheduled, and single-user (SU)/multi-user (MU) transmission scheduling is also possible.

A TCI field consists of 3 bits, and QCL for DMRS is dynamically indicated by indicating up to 8 TCI states according to a TCI field value.

- The UE receives downlink data from the base station on the PDSCH in S1403.

If the UE detects PDCCH including DCI format 1_0 or 1_1, the UE decodes the PDSCH based on an indication for the DCI.

When the UE receives the PDSCH scheduled by DCI format 1, the UE may be configured with a DMRS configuration type by higher layer parameter 'dmrs-Type', and the DMRS type is used to receive the PDSCH. The UE may also be configured with the maximum number of front-loaded DMRS symbols for the PDSCH by higher layer parameter 'maxLength'

For DMRS configuration type 1, if a single codeword is scheduled and antenna ports mapped to indexes of {2, 9, 10, 11 or 30} are designated, or if two codewords are scheduled, the UE assumes that all remaining perpendicular antenna ports do not associate with PDSCH transmission to another UE.

Alternatively, for DMRS configuration type 2, if a single codeword is scheduled and antenna ports mapped to indexes of {2, 10 or 23} are designated, or if two codewords are scheduled, the UE assumes that all remaining perpendicular antenna ports do not associate with PDSCH transmission to another UE.

When the UE receives the PDSCH, the UE may assume a precoding granularity P' as consecutive resource blocks in the frequency domain, where P' may correspond to one value of {2, 4, wideband} .

If P' is determined as wideband, the UE does not expect to be scheduled with non-contiguous RBs and may assume that the same precoding is applied to assigned resources.

On the other hand, if P' is determined as one of {2, 4}, a precoding resource block group (PRG) is divided into P' consecutive PRBs. The number of actually consecutive PRBs in each PRG may be one or more. The UE may assume that the same precoding is applied to consecutive downlink PRBs in the PRG.

In order for the UE to determine a modulation order, a target code rate, and a transport block size within the PDSCH, the UE first reads 5-bit MCD field within DCI and determines the modulation order and the target code rate. Further, the UE reads a redundancy version field within the DCI and determines a redundancy version. The UE determines the transport block size using the number of layers and the total number of assigned PRBs before the rate matching.

## Uplink Transmission and Reception Operation

FIG. 18 illustrates an example of uplink transmission and reception operation.

- Referring to FIG. 18, a base station schedules uplink transmission such as frequency/time resource, transmission layer, uplink precoder, and MCS in S1501. In particular, the base station may determine a beam for PUSCH transmission to a UE through the operations described above.
- The UE receives, from the base station, DCI for uplink scheduling (i.e., including scheduling information of PUSCH) on a PDCCH in S1502.

DCI format 0_0 or 0_1 may be used for uplink scheduling, and the DCI format 0_1 particularly includes the following information: an identifier for DCI formats, UL/SUL (supplementary uplink) indicator, a bandwidth part indicator, frequency domain resource assignment, time domain resource assignment, a frequency hopping flag, a modulation and coding scheme (MCS), a SRS resource indicator (SRI), precoding information and number of layers, antenna port(s), SRS request, DMRS sequence initialization, and an uplink shared channel (UL-SCH) indicator.

In particular, SRS resources configured within a set of SRS resources associated with higher layer parameter 'usage' by a SRS resource indicator field may be indicated. 'spatialRelationInfo' may be configured for each SRS resource, and this value may be one of {CRI, SSB, SRI}.

- The UE transmits uplink data to the base station on the PUSCH in S1503.

If the UE detects PDCCH including the DCI format 0_0 or 0_1, the UE transmits the corresponding PUSCH based on an indication by the DCI.

Two types of transmission methods including codebook based transmission and non-codebook based transmission are supported for PUSCH transmission:

i) When higher layer parameter 'txConfig' is set to 'codebook', the UE is configured with the codebook based transmission. On the other hand, when the higher layer parameter 'txConfig' is set to 'nonCodebook', the UE is configured with the non-codebook based transmission. If the higher layer parameter 'txConfig' is not set, the UE does not expect to be scheduled by the DCI format 0_1. If the PUSCH is scheduled by the DCI format 0_0, the PUSCH transmission is based on a single antenna port.

For the codebook based transmission, the PUSCH may be scheduled in the DCI format 0_0, the DCI format 0_1, or semi-statically. If this PUSCH is scheduled by the DCI format 0_1, the UE determines a PUSCH transmission precoder based on an SRI from DCI, a transmit precoding matrix indicator (TPMI), and a transmission tank, as given by a SRS resource indicator field and a field of precoding information and number of layers. The TPMI is used to indicate a precoder that may be applied over an antenna port, and corresponds to SRS resource selected by the SRI when multiple SRS resources are configured. Alternatively, if a single SRS resource is configured, the TPMI is used to indicate a precoder that may be applied over an antenna port, and corresponds to the corresponding single SRS resource. A transmission precoder is selected from an uplink codebook having the same number of antenna ports as upper layer parameter 'nrofSRS-Ports'. When the UE is configured with the higher layer parameter 'txConfig' set to 'codebook', at least one SRS resource is configured to the UE. A SRI indicated in a slot n is associated with the latest transmission of SRS resource identified by the SRI, where the SRS resource precedes the PDCCH (i.e., slot n) carrying the SRI.

ii) For the non-codebook based transmission, the PUSCH may be scheduled in the DCI format 0_0, the DCI format 0_1, or semi-statically. When multiple SRS resources are configured, the UE may determine a PUSCH precoder and a transmission tank based on a wideband SRI, where the SRI is given by an SRS resource indicator within DCI, or given by upper layer parameter 'srs-ResourceIndicator'. The UE uses one SRS resource or multiple SRS resources for the SRS transmission, where the number of SRS resources may be configured for the simultaneous transmission within the same RB based on a UE capability. Only one SRS port is configured for each SRS resource. Only one SRS resource may be configured with the upper layer parameter 'usage' that is set to 'nonCodebook'. The maximum number of SRS resources that can be configured for the non-codebook based uplink transmission is 4. A SRI indicated in a slot n is associated with the latest transmission of SRS resource identified by the SRI, where the SRS transmission precedes the PDCCH (i.e., slot n) carrying the SRI.

The contents described above (e.g., 3GPP system, frame structure, NR system, etc.) can be combined with methods proposed in the present disclosure to be described below. Alternatively, the contents described above can be supplemented to clarify technical features of the methods proposed in the present disclosure. In the present disclosure, '/' means 'and', 'or', or 'and/or' based on the context.

In relation to a physical uplink shared channel (PUSCH) transmission of the UE, the base station may schedule UL transmission such as frequency/time resources, a transmission layer, an uplink (UL) precoder, a modulation and coding scheme (MCS), etc. Downlink control information (DCI) format 0_0/0_1 may be used for the UL scheduling, or semi-statically scheduling may be used. In particular, the DCI format 0_1 may include a sounding reference signal (SRS) resource indicator (SRI), a transmit precoding matrix indicator (TPMI), rank indicator (RI) information, etc. DCI format 0_2 introduced in URLLC may also be considered.

A codebook (CB) based scheme and a non-codebook (NCB) based scheme (i.e., two schemes) are supported for the PUSCH transmission. For example, for the CB based scheme, a precoder may be determined based on SRI, TPMI, and a transmission tank. For the NCB based scheme, a precoder and a transmission tank may be determined based on SRI. The uplink transmission and reception operation described with reference to FIG. 18 may be referred in relation to the PUSCH transmission.

In multi-beam (MB) of current Rel-17 feMIMO (further enhanced MIMO), an operation of simultaneously changing/updating Tx and Rx beams of multiple channels/reference signals (RSs) that are a target through a downlink (DL) DCI-based beam indication is considered. For example, the DCI-based beam indication may mean indicating a beam based on DCI for scheduling DL. For example, in the present disclosure, the DCI-based beam indication may also be interpreted as DCI or beam information for a beam or an indication of beam. In this instance, in the corresponding operation, beam information to be changed/updated may be indicated based on a joint DL/UL transmission configuration indication (TCI) or a separate DL/UL TCI, but there is a problem in that the beam information to be changed/updated does not include information for a precoder and/or MCS, etc. related to the above-described UL transmission. For example, a joint DL/UL TCI state (or joint TCI state) may be used for changing/updating UL beam and/or DL beam. Alternatively, a separate DL/UL TCI state (or UL TCI state, DL TCI state) may be used for changing/updating only the UL beam or changing/updating only the DL beam. In the present disclosure, the TCI state may mean the joint DL/UL TCI state and/or the separate DL/UL TCI state.

Hence, if a beam of a configured-grant (CG) PUSCH (e.g., semi-persistent scheduling (SPS)/multi-slot PUSCH, etc.) is changed, configuration of an UL precoder of the CB/NCB based scheme based on the existing TPMI/SRI may no longer be valid. For example, CG PUSCH transmission may mean a transmission method in which the scheduling is performed by only radio resource control (RRC) signaling without DCI or the transmission is activated by DCI. Further, even for a dynamic-grant (DG) PUSCH, if repetition type A/B PUSCH is scheduled, if PUSCH beam update is performed during repetition, the precoder by the existing indicated TPMI/SRI may be not valid. For example, DG PUSCH transmission may mean a transmission method in which the scheduling is performed based on DCI.

Accordingly, the present disclosure describes a method of configuring an UL precoder and/or an MCS based on a DL DCI-based beam indication method when the beam change/update is applied to a PUSCH.

Specifically, the present disclosure describes a method of changing/updating TPMI/TRI/SRI(s)/MCS for a PUSCH based on a DL DCI-based beam indication (hereinafter, first embodiment), and a method of applying an open-loop precoder for PUSCH transmission (hereinafter, second embodiment).

Embodiments described below in the present disclosure are merely distinguished for convenience of explanation. Thus, it is obvious that partial method and/or partial configuration of any embodiment can be substituted or combined with partial method and/or partial configuration of another embodiment.

A slot, a subframe, a frame, etc. described in embodiments of the present disclosure may be detailed examples of predetermined time units used in a wireless communication system. That is, when applying methods described in the present disclosure, time unit can be replaced by other time units applied to other wireless communication systems.

In the present disclosure, L1 signaling may mean DCI based dynamic signaling between a base station and a UE, and L2 signaling may mean radio resource control (RRC)/medium access control-control element (MAC-CE) based higher layer signaling between a base station and a UE.

A first embodiment is first described below.


**First Embodiment**


A first embodiment describes a method of updating TPMI/TRI/SRI(s)/MCS for a PUSCH based on a DL DCI-based beam indication. For example, a base station may change/update TPMI/transmit rank indicator (TRI)/SRI(s)/MCS, etc. based on a DL DCI-based beam indication for the purpose of configuration of a PUSCH precoder and/or an MCS, etc. of a UE.

Hereinafter, a proposed method based on the first embodiment of the present disclosure is described by being divided into a method of jointly encoding a precoder of PUSCH(s) configured as a target, on which beam change/update is to be performed based on the DCI upon the DL DCI-based beam indication, with a TCI state (hereinafter, method 1-1), or a method of explicitly indicating the precoder based on a separate field (hereinafter, method 1-2).

Methods described below are merely distinguished for convenience of description, and it is obvious that configuration of any method can be replaced or combined with configuration of another method.


**(Method 1-1)** - Joint encoding scheme


Method 1-1 is a method of jointly encoding and/or associating a TCI state indicated by the DL DCI with information of an UL precoder and/or MCS, etc, of PUSCH(s) which is a target. For example, the joint encoding may mean associating the TCI state with TPMI/MCS, etc. or associating and configuring the TCI state with TPMI/MCS, etc. For example, in this case, the UE may acquire information for TPMI/MCS, etc. based on only TCI state (information) of DCI.

For example, in a CB based scheme, TCI state(s) and TPMI/MCS based on RI may be associated and operate. That is, the TPMI/MCS per RI may be configured through the association, and the corresponding TPMI/MCS may be applied based on the number of ports of the target PUSCH(s) to perform UL transmission. For example, each TCI state may associate/correspond to TPMIs/MCSs per RI and/or the number of ports. In this instance, the UE may perform the UL transmission based on TPMI/MCS corresponding to the RI and/or the number of ports among the TPMIs/MCSs corresponding to the TCI state indicated by DCI. Alternatively, the TPMI per port of the PUSCH(s) configured as the target may be configured and operated based on a specific TPMI corresponding to the supported maximum RI (e.g., RI = 4). For example, the TPMI/MCS is not separately configured per RI, and the UL transmission may be performed based on the number of ports of the PUSCH(s)/vector(s) of the TPMI according to the applied RI using the specific TPMI of the maximum RI (e.g., RI = 4). For example, for the PUSCH in which RI = 2, a matrix reduction may be performed using first and second vectors/columns of the TPMI of RI = 4, and the reduced matrix may be applied in UL. In this instance, the configuration is possible for MCS configuration, and a pre-defined scheme is possible by configuring a conservative MCS level, etc.

And/or, in an NCB based scheme, the TCI state and the TPMI/MCS based on the RI of the PUSCH(s) configured as the target among a total of four SRS resources for NCB may be associated and operated. For example, in the NCB based scheme, resources per RI may be associated and configured for the TCI state and up to four SRS resources configured in an SRS resource set for NCB. For example, a method of associating and configuring {SRS#0, SRS#2} for RI=2, {SRS#0, SRS#1, SRS#3} for RI=3, and {SRS#0, SRS#1, SRS#2, SRS#3} for RI=4 is possible. For example, since the up to four SRS resources are merely an example, a varying number of SRS resources may be associated and configured based on the configuration.

And/or, with respect to switching for an open-loop scheme for a default operation of a second embodiment, the TCI state(s) may be jointly encoded. For example, the joint encoding may be performed/applied/used for open-loop precoders used in the second embodiment so that it can be equally/differently applied based on the TCI state(s).

**(Method 1-2)** - Indication scheme based on separate field

A separate field may be added to a DL DCI-based beam indication, and a corresponding precoder/MCS may be indicted to PUSCH(s) which is(are) a target. That is, method 1-2 is a method of explicitly indicating an UL precoder/MCS, etc. to be applied to a CB/NCB based PUSCH using a specific field within a DL TCI, unlike the method 1-1.

And/or, a precoder for a fallback operation until configuration of a detailed UL precoder and MCS, etc. comes may be configured with new UL scheduling for the above operation. For example, a CB-based scheme may configure a specific rank or a precoding matrix indicator (PMI), or consider rank=1 and/or TPMI=1 (corresponding to the number of SRS ports of a lowest/highest SRS resource or corresponding to the number of pre-defined/pre-configured SRS ports) as a default. An NCB-based scheme may consider SRI=1 (e.g., rank = 1, a lowest/highest SRS resource in an SRS resource set). Further, a precoder for the purpose of the fallback may be differently configured per non-coherent/partial-coherent/full coherent UE.

**Second Embodiment**

A second embodiment describes a method of applying an open-loop precoder for PUSCH transmission.

Unlike the first embodiment in which a precoder of PUSCH(s) configured as a target, on which beam change/update is to be performed based on the DCI upon the DL DCI-based beam indication, is jointly encoded with a TCI state, or is explicitly indicated using a separate field, the second embodiment is a method of performing UL PUSCH transmission based on a pre-defined precoder if the beam change/update is performed. For example, a UE may apply precoding of an open-loop precoder as a precoder for PUSCH transmission if beam of the PUSCH(s), which is(are) the target, is changed/updated based on the DL DCI-based beam indication. For example, the open-loop precoder may be space frequency block coding (SFBC), space time block coding (STBC), 1-port precoder cycling, small-delay cyclic delay diversity (CDD), and the like.

For example, in a CB based scheme, an open-loop (OL) precoder (e.g., SFBC, STBC, 1-port precoder cycling, small-delay CDD, etc.) configured per the number of ports may be used. That is, the above-described problem can be solved by ignoring the existing configured TPMI and performing the corresponding default precoding or random beamforming. Even in an NCB based scheme, a scheme of the OL precoder may be applied and operated based on the number of ports of the PUSCH(s) configured as the target. The OL precoder may be understood/replaced with a precoder of a predefined scheme or a precoder of a pre-configured scheme by higher layer configuration such as RRC of a base station.

And/or, when operation of the second embodiment is applied together with the first embodiment or is separately applied, the operation of the second embodiment may be applied only for a pre-configured/pre-activated CG-PUSCH, or may be applied together for a CG-PUSCH and a DG PUSCH with a pre-triggered repetition. For a multi-slot PUSCH and/or a PUSCH repetition, configuration of the existing PUSCH scheduling may be maintained and operated until the corresponding operation is completed.

And/or, if in an operation of the PUSCH repetition/multi-slot PUSCH, the DL DCI-based beam indication is received to change the beam, only the corresponding beam information may be changed after a specific application time, or the beam information and information of UL precoder, MCS, etc. may be simultaneously changed. In case of an application time of the TCI state, the TCI state may be applied from a first transmission occasion (TO) after a beam application time (BAT) of an UL TCI. In this instance, if it is before D/n (e.g., n = 2) for the entire duration D for performing the repetition or the multi-slot PUSCH, the above change operation may be applied at time after D/2, or may be applied immediately after BAT. Alternatively, if it is after D/n, an operation of maintaining the existing PUSCH scheduling is possible. In this instance, 'n' is configurable or may be set/defined/promised to a pre-defined value (e.g., n=2).

And/or, the UE may operate in anticipation of new PUSCH scheduling coming within specific X slot/symbol, in order to solve ambiguity of the UL precoder and MCS, etc. after the DL DCI-based beam indication.

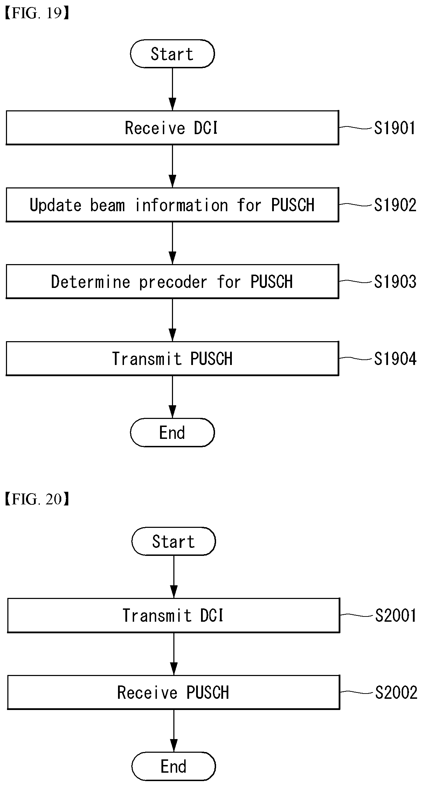

FIG. 19 is a flow chart illustrating an operation method of a UE described in the present disclosure.

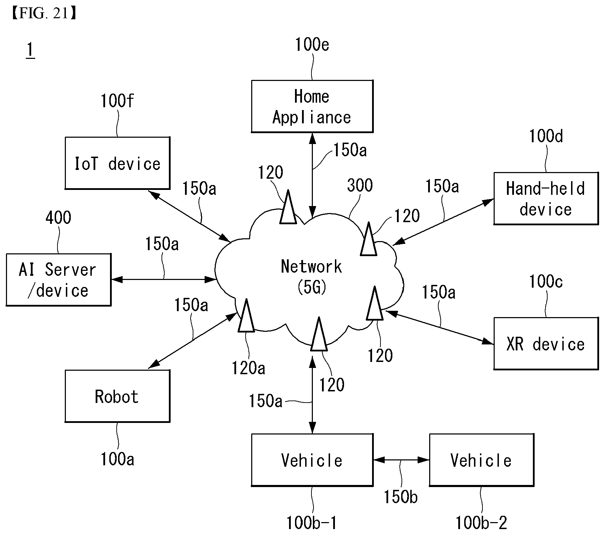

Referring to FIG. 19, a UE (100/200 of FIGS. 21 to 24) may receive, from a base station (BS), downlink control information (DCI) including information for a transmission configuration indication (TCI) state (e.g., transmission configuration indication field), in step S1901.

And/or, the TCI state may be related to at least one of a transmit precoding matrix indicator (TPMI) and/or at least one sounding reference signal resource indicator (SRI).

And/or, the DCI may be to schedule a physical downlink shared channel (PDSCH). For example, the DCI may have DCI format 1_0/1_1/1_2.

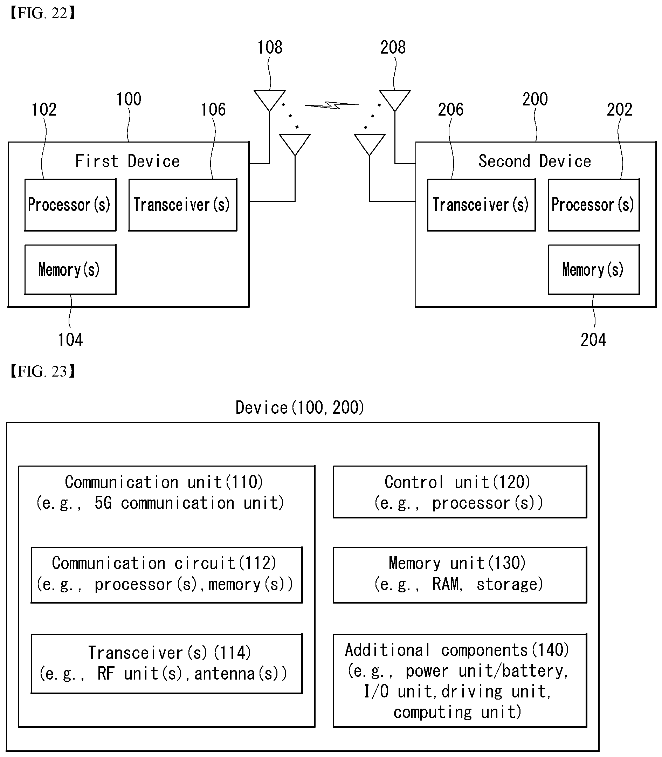

For example, an operation of the UE to receive the DCI in the step S1901 may be implemented by a device of FIGS. 21 to 24. For example, referring to FIG. 22, one or more processors 102/202 may control one or more memories 104/204 and/or one or more transceivers 106/206 so as to receive the DCI.

And/or, the UE (100/200 of FIGS. 21 to 24) may update beam information for the PUSCH based on the TCI state, in step S 1902.

For example, the beam information for the PUSCH may be spatial relation information or TCI state (information). For example, updating the beam information may mean changing the beam information for the PUSCH (e.g., spatial relation information/TCI state) to the TCI state (information) or changing a reference RS or QCL type-D RS of the beam information for the PUSCH to QCL type-D RS of the TCI state (information). For example, the QCL type-D RS may mean a reference RS in which QCL-type is set to typeD.

For example, if the beam information for the PUSCH is the spatial relation information, the spatial relation information may be spatial relation information of a sounding reference signal (SRS) resource related to the PUSCH (e.g., SRS-SpatialRelationInfo of Table 7). And/or, the SRS resource related to the PUSCH may mean an SRS resource indicated by a SRI included in PUSCH scheduling DCI before the DCI. Alternatively, if the beam information for the PUSCH is the spatial relation information, the spatial relation information may be configured separately for the PUSCH.

For example, an operation of the UE to update the beam information in the step S1902 may be implemented by the device of FIGS. 21 to 24. For example, referring to FIG. 22, one or more processors 102/202 may control one or more memories 104/204 and/or one or more transceivers 106/206 so as to update the beam information.

And/or, the UE (100/200 of FIGS. 21 to 24) may determine a precoder for the PUSCH based on at least one of the TPMI and/or the at least one SRI, in step S1903.

For example, an operation of the UE to determine the precoder in the step S1903 may be implemented by the device of FIGS. 21 to 24. For example, referring to FIG. 22, one or more processors 102/202 may control one or more memories 104/204 and/or one or more transceivers 106/206 so as to determine the precoder.

And/or, the UE (100/200 of FIGS. 21 to 24) may transmit the PUSCH to the base station based on the precoder and the beam information, in step S1904.

And/or, based on a transmission of the PUSCH being a codebook based uplink transmission, the TPMI may be based on a rank indicator (RI) and/or the number of ports. For example, the TCI state (or information for the TCI state) may be related to a TPMI per RI and/or the number of ports for the PUSCH. That is, the TCI state may be related to a plurality of TPMIs. The UE may determine one TPMI of the plurality of TPMIs related to the TCI state indicated by the DCI based on the RI and/or the number of ports applied to the PUSCH. The PUSCH may be transmitted based on the one TPMI.

And/or, the TCI state may be related to a modulation and coding scheme (MCS) based on the RI and/or the number of ports. And/or, the PUSCH may be transmitted based on the MCS. For example, the TCI state (or information for the TCI state) may be related to a MCS per RI and/or the number of ports for the PUSCH. That is, the TCI state may be related to a plurality of MCSs. The UE may determine one MCS of the plurality of MCSs related to the TCI state indicated by the DCI based on the RI and/or the number of ports applied to the PUSCH. The PUSCH may be transmitted based on the one MCS. And/or, the TCI state may be related to the TRI and/or the at least one SRI. And/or, the TRI and/or the at least one SRI may be configured/determined/used/applied in the same manner as the TPMI.

And/or, based on the transmission of the PUSCH being the codebook based uplink transmission, the TPMI may be related to a maximum rank indicator (RI). And/or, a precoder based on the TPMI may be reduced based on the RI and/or the number of ports. Here, the precoder may refer to a precoding matrix. And/or, the PUSCH may be transmitted based on the reduced precoder. For example, the TCI state may be related to a TPMI related to the maximum RI. Here, the maximum RI may be configured by the base station. And/or, the UE may reduce a precoding matrix determined by the TPMI related to the maximum RI based on the RI and/or the number of ports applied to the PUSCH and may use the reduced precoding matrix for the PUSCH transmission. And/or, the MCS applied to the PUSCH may be pre-defined or separately configured. And/or, the TCI state may be related to the TRI and/or the at least one SRI. And/or, the TRI and/or the at least one SRI may be configured/determined/used/applied in the same manner as the TPMI.

And/or, based on the transmission of the PUSCH being a non-codebook based uplink transmission, the at least one SRI may be based on a rank indicator (RI). For example, the TCI state may be related to at least one SRI per RI. For example, the TCI state may be related to {SRS#0, SRS#2} for RI=2, {SRS#0, SRS#1, SRS#3} for RI=3, and {SRS#0, SRS#1, SRS#2, SRS#3} for RI=4. In the present disclosure, A being related to B may mean that A is associated/corresponds to B. In this instance, if RI = 2, the UE may determine a precoder based on {SRS#0, SRS#2} and transmit the PUSCH based on the precoder. And/or, the MCS applied to the PUSCH may be pre-defined or separately configured.

And/or, the PUSCH may be a configured grant PUSCH or a dynamic grant PUSCH for repetition.

For example, an operation of the UE to transmit the PUSCH in the step S1904 may be implemented by the device of FIGS. 21 to 24. For example, referring to FIG. 22, one or more processors 102/202 may control one or more memories 104/204 and/or one or more transceivers 106/206 so as to transmit the PUSCH.

Since the operation of the UE described with reference to FIG. 19 is the same as the operation of the UE described with reference to FIGS. 1 to 18 (e.g., the first and second embodiments), a detailed operation thereof is omitted.

The operation method of the UE described with reference to FIG. 19 can be applied by being combined or replaced with the proposed methods of the first and second embodiments. And/or, the operation method of the UE described with reference to FIG. 19 can be supplemented by the proposed methods of the first and second embodiments.

The signaling and the operation described above may be implemented by a device (e.g., FIGS. 21 to 24) to be described below. For example, the signaling and the operation described above may be processed by one or more processors of FIGS. 21 to 24, and the signaling and the operation described above may be stored in a memory in the form of commands/programs (e.g., instructions, executable codes) for running at least one processor of FIGS. 21 to 24.

For example, a processing apparatus configured to control a UE to transmit a PUSCH in a wireless communication system may comprise at least one processor, and at least one memory operably connected to the at least one processor, wherein the at least one memory may be configured to store instructions performing operations based on being executed by the at least one processor, wherein the operations may comprise receiving DCI including information for a TCI state from a base station, the TCI state being related to a TPMI or at least one SRI, updating beam information of the PUSCH based on the TCI state, determining a precoder for the PUSCH based on the TPMI or the at least one SRI, and transmitting the PUSCH to the base station based on the precoder and the beam information.

For example, in a computer readable storage medium storing at least one instruction, the at least one instruction may be configured to allow at least one processor to control operations based on being executed by the at least one processor, and the operations may comprise receiving DCI including information for a TCI state from a base station, the TCI state being related to a TPMI or at least one SRI, updating beam information of a PUSCH based on the TCI state, determining a precoder for the PUSCH based on the TPMI or the at least one SRI, and transmitting the PUSCH to the base station based on the precoder and the beam information.

FIG. 20 is a flow chart illustrating an operation method of a base station described in the present disclosure.

Referring to FIG. 20, a base station (BS) (100/200 of FIGS. 21 to 24) may transmit, to a UE, downlink control information (DCI) including information for a transmission configuration indication (TCI) state (e.g., transmission configuration indication field), in step S2001.

And/or, the TCI state may be related to at least one of a transmit precoding matrix indicator (TPMI) and/or at least one sounding reference signal resource indicator (SRI).

And/or, the DCI may be to schedule a physical downlink shared channel (PDSCH). For example, the DCI may have DCI format 1_0/1_1/1_2.

For example, an operation of the BS to transmit the DCI in the step S2001 may be implemented by a device of FIGS. 21 to 24. For example, referring to FIG. 22, one or more processors 102/202 may control one or more memories 104/204 and/or one or more transceivers 106/206 so as to transmit the DCI.

And/or, beam information for the PUSCH may be updated based on the TCI state.

For example, the beam information for the PUSCH may be spatial relation information or TCI state (information). For example, updating the beam information may mean changing the beam information for the PUSCH (e.g., spatial relation information/TCI state) to the TCI state (information) or changing a reference RS or QCL type-D RS of the beam information for the PUSCH to QCL type-D RS of the TCI state (information). For example, the QCL type-D RS may mean a reference RS in which QCL-type is set to typeD.

For example, if the beam information for the PUSCH is the spatial relation information, the spatial relation information may be spatial relation information of a sounding reference signal (SRS) resource related to the PUSCH (e.g., SRS-SpatialRelationInfo of Table 7). And/or, the SRS resource related to the PUSCH may mean an SRS resource indicated by a SRI included in PUSCH scheduling DCI before the DCI. Alternatively, if the beam information for the PUSCH is the spatial relation information, the spatial relation information may be configured separately for the PUSCH.

And/or, a precoder for the PUSCH may be determined based on at least one of the TPMI and/or the at least one SRI.

And/or, the BS (100/200 of FIGS. 21 to 24) may receive the PUSCH from the UE based on the precoder and the beam information, in step S2002.

And/or, based on a reception of the PUSCH being a codebook based uplink reception, the TPMI may be based on a rank indicator (RI) and/or the number of ports. For example, the TCI state (or information for the TCI state) may be related to a TPMI per RI and/or the number of ports for the PUSCH. That is, the TCI state may be related to a plurality of TPMIs. The UE may determine one TPMI of the plurality of TPMIs related to the TCI state indicated by the DCI based on the RI and/or the number of ports applied to the PUSCH. The PUSCH may be transmitted based on the one TPMI.

And/or, the TCI state may be related to a modulation and coding scheme (MCS) based on the RI and/or the number of ports. And/or, the PUSCH may be transmitted based on the MCS. For example, the TCI state (or information for the TCI state) may be related to a MCS per RI and/or the number of ports for the PUSCH. That is, the TCI state may be related to a plurality of MCSs. The UE may determine one MCS of the plurality of MCSs related to the TCI state indicated by the DCI based on the RI and/or the number of ports applied to the PUSCH. The PUSCH may be transmitted based on the one MCS. And/or, the TCI state may be related to the TRI and/or the at least one SRI. And/or, the TRI and/or the at least one SRI may be configured/determined/used/applied in the same manner as the TPMI.

And/or, based on the reception of the PUSCH being the codebook based uplink reception, the TPMI may be related to a maximum rank indicator (RI). And/or, a precoder based on the TPMI may be reduced based on the RI and/or the number of ports. Herein, the precoder may refer to a precoding matrix. And/or, the PUSCH may be transmitted based on the reduced precoder. For example, the TCI state may be related to a TPMI related to the maximum RI. Here, the maximum RI may be configured by the base station. And/or, the UE may reduce a precoding matrix determined by the TPMI related to the maximum RI based on the RI and/or the number of ports applied to the PUSCH and may use the reduced precoding matrix for the PUSCH transmission. And/or, the MCS applied to the PUSCH may be pre-defined or separately configured. And/or, the TCI state may be related to the TRI and/or the at least one SRI. And/or, the TRI and/or the at least one SRI may be configured/determined/used/applied in the same manner as the TPMI.

And/or, based on the reception of the PUSCH being a non-codebook based uplink reception, the at least one SRI may be based on a rank indicator (RI). For example, the TCI state may be related to at least one SRI per RI. For example, the TCI state may be related to {SRS#0, SRS#2} for RI=2, {SRS#0, SRS#1, SRS#3} for RI=3, and {SRS#0, SRS#1, SRS#2, SRS#3} for RI=4. In the present disclosure, A being related to B may mean that A is associated/corresponds to B. In this instance, if RI = 2, the UE may determine a precoder based on {SRS#0, SRS#2} and transmit the PUSCH based on the precoder. And/or, the MCS applied to the PUSCH may be pre-defined or separately configured.

And/or, the PUSCH may be a configured grant PUSCH or a dynamic grant PUSCH for repetition.

For example, an operation of the BS to receive the PUSCH in the step S2002 may be implemented by the device of FIGS. 21 to 24. For example, referring to FIG. 22, one or more processors 102/202 may control one or more memories 104/204 and/or one or more transceivers 106/206 so as to receive the PUSCH.

Since the operation of the BS described with reference to FIG. 20 is the same as the operation of the BS described with reference to FIGS. 1 to 19 (e.g., the first and second embodiments), a detailed operation thereof is omitted.

The operation method of the BS described with reference to FIG. 20 can be applied by being combined or replaced with the proposed methods of the first and second embodiments. And/or, the operation method of the BS described with reference to FIG. 20 can be supplemented by the proposed methods of the first and second embodiments.

The signaling and the operation described above may be implemented by a device (e.g., FIGS. 21 to 24) to be described below. For example, the signaling and the operation described above may be processed by one or more processors of FIGS. 21 to 24, and the signaling and the operation described above may be stored in a memory in the form of commands/programs (e.g., instructions, executable codes) for running at least one processor of FIGS. 21 to 24.

For example, a processing apparatus configured to control a base station to receive a PUSCH in a wireless communication system may comprise at least one processor, and at least one memory operably connected to the at least one processor, wherein the at least one memory may be configured to store instructions performing operations based on being executed by the at least one processor, wherein the operations may comprise transmitting DCI including information for a TCI state to a UE, the TCI state being related to a TPMI or at least one SRI, beam information of the PUSCH being updated based on the TCI state, a precoder for the PUSCH being determined based on the TPMI or the at least one SRI, and receiving the PUSCH from the UE based on the precoder and the beam information.

For example, in a computer readable storage medium storing at least one instruction, the at least one instruction may be configured to allow at least one processor to control operations based on being executed by the at least one processor, and the operations may comprise transmitting DCI including information for a TCI state to a UE, the TCI state being related to a TPMI or at least one SRI, beam information of a PUSCH being updated based on the TCI state, a precoder for the PUSCH being determined based on the TPMI or the at least one SRI, and receiving the PUSCH from the UE based on the precoder and the beam information.

## Example of communication system to which the present disclosure is applied

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 21 shows a communication system 1 based on an embodiment of the present disclosure.

Referring to FIG. 21, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Example of wireless device to which the present disclosure is applied

FIG. 22 illustrates wireless devices based on an embodiment of the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 11.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) based on the descriptions, functions, procedures, proposals, methods, and/or operational flowcharts disclosed in this document. The one or more processors 102 and 202 may generate messages, control information, data, or information based on the descriptions, functions, procedures, proposals, methods, and/or operational flowcharts disclosed in this document. The one or more processors 102 and 202 may generate signals (e.g., baseband signals) including PDUs, SDUs, messages, control information, data, or information based on the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information based on the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

**Application example of wireless device to which the present disclosure is applied**

FIG. 23 illustrates another example of a wireless device based on an embodiment of the present disclosure. The wireless device may be implemented in various forms based on a use-case/service.

Referring to FIG. 23, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured based on types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the hand-held device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place based on a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

**Example of mobile device to which the present disclosure is applied**

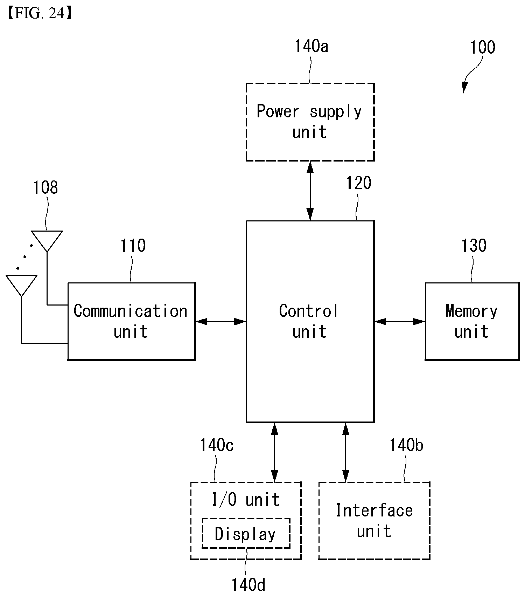

FIG. 24 shows a hand-held device based on an embodiment of the present disclosure. The hand-held device may include a smartphone, a smart pad, a wearable device (e.g., a smart watch or a smart glasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 24, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 23, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

A wireless communication technology implemented by a wireless device (e.g., 100, 200) according to the present disclosure may include narrowband Internet of Things for low power communication in addition to LTE, NR and 6G. In this case, for example, the NB-IoT technology may be an example of a low power wide area network (LPWAN) technology and may be implemented by standards such as LTE Cat NB1 and/or LTE Cat NB2, and the present disclosure is not limited to the aforementioned names. Additionally or alternatively, the wireless communication technology implemented by the wireless device (e.g., 100, 200) according to the present disclosure may perform communication based on the LTE-M technology. In this case, for example, the LTE-M technology may be an example of the LPWAN technology and may be called various names, such as enhanced Machine Type Communication (eMTC). For example, the LTE-M technology may be implemented by at least one of various standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and the present disclosure is not limited to the aforementioned names. Additionally or alternatively, the wireless communication technology implemented by the wireless device (e.g., 100, 200) according to the present disclosure may include at least one of ZigBee, Bluetooth and a low power wide area network (LPWAN) in which low power communication is considered, and the present disclosure is not limited to the aforementioned names. For example, the ZigBee technology may generate personal area networks (PAN) related to small/low-power digital communication based on various standards such as IEEE 802.15.4, and may be called various names.

The embodiments described above are implemented by combinations of components and features of the present disclosure in predetermined forms. Each component or feature should be considered selectively unless specified separately. Each component or feature can be carried out without being combined with another component or feature. Moreover, some components and/or features are combined with each other and can implement embodiments of the present disclosure. The order of operations described in embodiments of the present disclosure can be changed. Some components or features of one embodiment may be included in another embodiment, or may be replaced by corresponding components or features of another embodiment. It is apparent that some claims referring to specific claims may be combined with another claims referring to the claims other than the specific claims to constitute the embodiment or add new claims by means of amendment after the application is filed.

Embodiments of the present disclosure can be implemented by various means, for example, hardware, firmware, software, or combinations thereof. When embodiments are implemented by hardware, one embodiment of the present disclosure can be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

When embodiments are implemented by firmware or software, one embodiment of the present disclosure can be implemented by modules, procedures, functions, etc. performing functions or operations described above. Software code can be stored in a memory and can be driven by a processor. The memory is provided inside or outside the processor and can exchange data with the processor by various well-known means.

It is apparent to those skilled in the art that the present disclosure can be embodied in other specific forms without departing from essential features of the present disclosure. Accordingly, the above detailed description should not be construed as limiting in all aspects and should be considered as illustrative. The scope of the present disclosure should be determined by rational construing of the appended claims, and all modifications within an equivalent scope of the present disclosure are included in the scope of the present disclosure.

[Industrial Applicability]

Although a method of transmitting and receiving a PDCCH in a wireless communication system according to the present disclosure has been described focusing on examples applying to the 3GPP LTE/LTE-A system and 5G system (new RAT system), the present disclosure can be applied to various wireless communication systems, such as beyond 5G, 6G, and beyond 6G, in addition to the systems described above.

**Claims**

1. A method of transmitting, by a user equipment (UE), a physical uplink shared channel (PUSCH) in a wireless communication system, the method comprising:

   receiving, from a base station (BS), downlink control information (DCI) including information for a transmission configuration indication (TCI) state, the TCI state being related to a transmit precoding matrix indicator (TPMI) or at least one sounding reference signal resource indicator (SRI);
   updating beam information for the PUSCH based on the TCI state;
   determining a precoder for the PUSCH based on the TPMI or the at least one SRI; and
   transmitting the PUSCH to the BS based on the precoder and the beam information.

2. The method of claim 1, wherein, based on a transmission of the PUSCH being a codebook based uplink transmission, the TPMI is based on a rank indicator (RI) and/or a number of ports.

3. The method of claim 2, wherein the TCI state is related to a modulation and coding scheme (MCS) based on the RI and/or the number of ports, and
   wherein the PUSCH is transmitted based on the MCS.

4. The method of claim 1, wherein, based on a transmission of the PUSCH being a codebook based uplink transmission, the TPMI is related to a maximum rank indicator (RI),

   wherein a precoder based on the TPMI is reduced based on an RI and/or a number of ports, and
   wherein the PUSCH is transmitted based on the reduced precoder.

5. The method of claim 1, wherein, based on a transmission of the PUSCH being a non-codebook based uplink transmission, the at least one SRI is based on a rank indicator (RI).

6. The method of claim 1, wherein the DCI is to schedule a physical downlink shared channel (PDSCH).

7. The method of claim 1, wherein the PUSCH is a configured grant PUSCH or a dynamic grant PUSCH for repetition.

8. A user equipment (UE) configured to transmit a physical uplink shared channel (PUSCH) in a wireless communication system, the UE comprising:

   at least one transceiver;
   at least one processor; and
   at least one memory operably connected to the at least one processor,
   wherein the at least one memory is configured to store instructions performing operations based on being executed by the at least one processor,
   wherein the operations comprise:

   receiving, from a base station (BS), downlink control information (DCI) including information for a transmission configuration indication (TCI) state, the TCI state being related to a transmit precoding matrix indicator (TPMI) or at least one sounding reference signal resource indicator (SRI);
   updating beam information for the PUSCH based on the TCI state;
   determining a precoder for the PUSCH based on the TPMI or the at least one SRI; and
   transmitting the PUSCH to the BS based on the precoder and the beam information.

9. A method of receiving, by a base station (BS), a physical uplink shared channel (PUSCH) in a wireless communication system, the method comprising:

   transmitting, to a user equipment (UE), downlink control information (DCI) including information for a transmission configuration indication (TCI) state,
   the TCI state being related to a transmit precoding matrix indicator (TPMI) or at least one sounding reference signal resource indicator (SRI),
   beam information for the PUSCH being updated based on the TCI state,
   a precoder for the PUSCH being determined based on the TPMI or the at least one SRI; and

receiving the PUSCH from the UE based on the precoder and the beam information.

10. The method of claim 9, wherein, based on a reception of the PUSCH being a codebook based uplink reception, the TPMI is based on a rank indicator (RI) and/or a number of ports.

11. The method of claim 10, wherein the TCI state is related to a modulation and coding scheme (MCS) based on the RI and/or the number of ports, and

wherein the PUSCH is received based on the MCS.

12. The method of claim 9, wherein, based on a reception of the PUSCH being a codebook based uplink reception, the TPMI is related to a maximum rank indicator (RI),

wherein a precoder based on the TPMI is reduced based on an RI and/or a number of ports, and
wherein the PUSCH is received based on the reduced precoder.

13. The method of claim 9, wherein, based on a reception of the PUSCH being a non-codebook based uplink reception, the at least one SRI is based on a rank indicator (RI).

14. The method of claim 9, wherein the DCI is to schedule a physical downlink shared channel (PDSCH).

15. The method of claim 9, wherein the PUSCH is a configured grant PUSCH or a dynamic grant PUSCH for repetition.

16. A base station (BS) configured to receive a physical uplink shared channel (PUSCH) in a wireless communication system, the BS comprising:

at least one transceiver;
at least one processor; and
at least one memory operably connected to the at least one processor,
wherein the at least one memory is configured to store instructions performing operations based on being executed by the at least one processor,
wherein the operations comprise:

transmitting, to a user equipment (UE), downlink control information (DCI) including information for a transmission configuration indication (TCI) state,
the TCI state being related to a transmit precoding matrix indicator (TPMI) or at least one sounding reference signal resource indicator (SRI),
beam information for the PUSCH being updated based on the TCI state,
a precoder for the PUSCH being determined based on the TPMI or the at least one SRI; and
receiving the PUSCH from the UE based on the precoder and the beam information.

17. A processing apparatus configured to control a user equipment (UE) to transmit a physical uplink shared channel (PUSCH) in a wireless communication system, the processing apparatus comprising:

at least one processor; and
at least one memory operably connected to the at least one processor,
wherein the at least one memory is configured to store instructions performing operations based on being executed by the at least one processor,
wherein the operations comprise:

receiving, from a base station (BS), downlink control information (DCI) including information for a transmission configuration indication (TCI) state, the TCI state being related to a transmit precoding matrix indicator (TPMI) or at least one sounding reference signal resource indicator (SRI);
updating beam information for the PUSCH based on the TCI state;
determining a precoder for the PUSCH based on the TPMI or the at least one SRI; and
transmitting the PUSCH to the BS based on the precoder and the beam information.

18. A computer readable storage medium storing at least one instruction,

wherein the at least one instruction is configured to allow at least one processor to control operations based on being executed by the at least one processor, and

wherein the operations comprise:

receiving, from a base station (BS), downlink control information (DCI) including information for a transmission configuration indication (TCI) state, the TCI state being related to a transmit precoding matrix indicator (TPMI) or at least one sounding reference signal resource indicator (SRI);

updating beam information for a physical uplink shared channel (PUSCH) based on the TCI state;

determining a precoder for the PUSCH based on the TPMI or the at least one SRI; and

transmitting the PUSCH to the BS based on the precoder and the beam information.

【FIG. 1】

【FIG. 2】

【FIG. 3】

Radio Frame 10ms

Fixed Size

Subframe 1ms

| 0 | 1 | 2 | 3 | 4 | 5 | 6 | 7 | 8 | 9 |

Subframe ={1, 2, 4} Slots

Slot

| 0 | 1 | 2 | 3 |

Slot={7, 14} Symbols

Size depends on subcarrier spacing

Symbol

| 0 | 1 | 2 | 3 | 4 | 5 | 6 | 7 | 8 | 9 | 10 | 11 | 12 | 13 |

Mini-Slot (URLLC)

Mini-Slot={2, 4, 7} Symbols − ffs

【FIG. 4】

One subframe

$14 \cdot 2^{\mu}$ OFDM symbols

$k = N_{RB}^{\mu} N_{SC}^{RB} - 1$

$N_{RB}^{\mu} N_{SC}^{RB} - 1$ Subcarriers

$N_{SC}^{RB}$ Subcarriers

Resource Block

Resource Element
- $(k, \bar{l})$ in resource grid
- $(k, l)$ in resource block

$k = 0$

$l = 0$

$l = 14 \cdot 2^{\mu} - 1$

【FIG. 5】

Resource grid

A carrier (up to 3300 subcarriers, i.e., 275 RBs)

A BWP

1RB = 12 subcarriers

1 RE

1 subcarrier

1 symbol

k=0

l=0 · · ·

【FIG. 6】

Antenna port A
Antenna port B } Numerology X

Antenna port A
Antenna port B } Numerology Y

【FIG. 7】

|  | SYSTEM |  |  |
| INITIAL CELL | INFORMATION |  |  |
| SEARCH | RECEPTION | RANDOM ACCESS PROCEDURE | GENERAL DL/UL Tx/Rx |

| PSS/SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH |

S701    S702    S703    S704    S705    S706    S707    S708

· DL/UL ACK/NACK
· UE CQI/PMI RI REPORT
  USING PUSCH AND PUCCH

**【FIG. 8】**

【FIG. 9】

【FIG. 10】

【FIG. 11】

(a)

Repetition "on"

(b)

Repetition "off"

Resource #0

Resource #1

Resource #2

CRI feedback

【FIG. 12】

```
UE                                                              BS
 |                                                              |
 |                                                    S610      |
 |                NZP CSI-RS resource set IE           /        |
 | <------------------------------------------------------------|
 |                                                              |
 |            Receive CSI resource(s) configured with  S620     |
 |            repetition 'ON' through the same Tx beam  /       |
 | <------------------------------------------------------------|
 |                                                              |
 | S630                                                         |
 | /                                                            |
+----------------------+                                        |
| Determine Rx beam    |                                        |
+----------------------+                                        |
 |               CSI report skip (No report) or       S640      |
 |               CSI reporting (CRI/L1-RSRP)            /        |
 |------------------------------------------------------------> |
 |                                                              |
```

【FIG. 13】

```
UE                                                              BS
 |                                                              |
 |                                                    S710      |
 |                NZP CSI-RS resource set IE           /        |
 | <------------------------------------------------------------|
 |                                                              |
 |            Receive CSI resource(s) configured with  S720     |
 |            repetition 'OFF' through different Tx beams /     |
 | <------------------------------------------------------------|
 |                                                              |
 | S730                                                         |
 | /                                                            |
+----------------------+                                        |
| Determine best beam  |                                        |
+----------------------+                                        |
 |                                                    S740      |
 |               CSI reporting (CRI/L1-RSRP)           /        |
 |------------------------------------------------------------> |
 |                                                              |
```

【FIG. 14】

Repetition "on"  Repetition "off"

frequency domain

0 1 2 3 4 5 6 7 8 9 10 11 12 13

Resource #0  Resource #1  Resource #2

RX beam sweeping

TX beam sweeping

time domain

【FIG. 15】

BS Rx beam sweeping

SRS#0 Reception  SRS#1 Reception  ...  SRS#N Reception

SRS #0, 1, ..., N

UE Tx beam (fixing)

(a)

BS Rx beam fixing

SRS#0  SRS#1

UE Tx beam sweeping

(b)

【FIG. 16】

【FIG. 17】

UE                                                                    BS

                                                                  S1401

                                    ┌─────────────────────────┐
                                    │   Downlink scheduling   │
                                    └─────────────────────────┘

                                                                  S1402
        ←──── DCI (PDCCH) for downlink scheduling ────

                                                                  S1403
        ←──────── Downlink data (PDSCH) ────────


【FIG. 18】

UE                                                                    BS

                                                                  S1501

                                    ┌─────────────────────────┐
                                    │   Uplink scheduling     │
                                    └─────────────────────────┘

                                                                  S1502
        ←──── DCI (PDCCH) for uplink scheduling ────

                                                                  S1503
        ──────── Uplink data (PUSCH) ────────→

【FIG. 19】

```
                    ┌─────────────┐
                    │    Start    │
                    └─────────────┘
                           │
                           ▼
        ┌──────────────────────────────────┐
        │          Receive DCI             │────S1901
        └──────────────────────────────────┘
                           │
                           ▼
        ┌──────────────────────────────────┐
        │  Update beam information for PUSCH │────S1902
        └──────────────────────────────────┘
                           │
                           ▼
        ┌──────────────────────────────────┐
        │     Determine precoder for PUSCH  │────S1903
        └──────────────────────────────────┘
                           │
                           ▼
        ┌──────────────────────────────────┐
        │          Transmit PUSCH          │────S1904
        └──────────────────────────────────┘
                           │
                           ▼
                    ┌─────────────┐
                    │     End     │
                    └─────────────┘
```

【FIG. 20】

```
                    ┌─────────────┐
                    │    Start    │
                    └─────────────┘
                           │
                           ▼
        ┌──────────────────────────────────┐
        │          Transmit DCI            │────S2001
        └──────────────────────────────────┘
                           │
                           ▼
        ┌──────────────────────────────────┐
        │          Receive PUSCH           │────S2002
        └──────────────────────────────────┘
                           │
                           ▼
                    ┌─────────────┐
                    │     End     │
                    └─────────────┘
```

【FIG. 21】

<u>1</u>

【FIG. 22】

【FIG. 23】

Device(100, 200)

【FIG. 24】

140a

100

Power supply
unit

120

108

110

130

Communication
unit

Control
unit

Memory
unit

140c

140b

I/O unit

Display

Interface
unit

140d

<div align="center">**INTERNATIONAL SEARCH REPORT**</div>

| | International application No. |
|---|---|
| | **PCT/KR2022/007320** |

| A. | CLASSIFICATION OF SUBJECT MATTER |
|---|---|
| | **H04B 7/0456**(2017.01)i; **H04B 7/06**(2006.01)i; **H04W 72/12**(2009.01)i; **H04L 5/00**(2006.01)i |

According to International Patent Classification (IPC) or to both national classification and IPC

| B. | FIELDS SEARCHED |
|---|---|

Minimum documentation searched (classification system followed by classification symbols)
H04B 7/0456(2017.01); H04L 5/00(2006.01); H04W 72/04(2009.01)

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & keywords: 전송 설정 지시 상태(transmission configuration indication state), 전송 프리코딩 매트릭스 지시자(transmit precoding matrix indicator), 사운딩 참조 신호 자원 지시자(sounding reference signal resource indicator), 빔(beam), 업데이트(update), 프리코더(precoder)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2020-246819 A1 (LG ELECTRONICS INC.) 10 December 2020 (2020-12-10)<br>See paragraphs [0284], [0357], [0463] and [0533]; and figure 16. | 1-18 |
| Y | KR 10-2021-0052562 A (SAMSUNG ELECTRONICS CO., LTD.) 10 May 2021 (2021-05-10)<br>See paragraphs [0137] and [0145]. | 1-18 |
| Y | KR 10-2021-0033370 A (SAMSUNG ELECTRONICS CO., LTD.) 26 March 2021 (2021-03-26)<br>See paragraphs [0291]-[0293], [0301], [0324] and [0456]. | 2-7,10-15 |
| A | LG ELECTRONICS. Enhancements on Multi-beam Operation. R1-2103504, 3GPP TSG RAN WG1 #104 bis-e, e-Meeting. 07 April 2021.<br>See sections 2.1 and 2.3. | 1-18 |
| A | LENOVO et al. Enhancements on Multi-beam Operation. R1-2104404, 3GPP TSG RAN WG1 #105-e, e-Meeting. 11 May 2021.<br>See sections 2.1 and 2.3. | 1-18 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 August 2022** | **31 August 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2022/007320**

| Patent document cited in search report | | | Publication date (day/month/year) | Patent family member(s) | | | Publication date (day/month/year) |
|---|---|---|---|---|---|---|---|
| WO | 2020-246819 | A1 | 10 December 2020 | EP | 3982582 | A1 | 13 April 2022 |
| | | | | KR | 10-2022-0018509 | A | 15 February 2022 |
| KR | 10-2021-0052562 | A | 10 May 2021 | EP | 3850779 | A1 | 21 July 2021 |
| | | | | US | 10887884 | B2 | 05 January 2021 |
| | | | | US | 2020-0100232 | A1 | 26 March 2020 |
| | | | | US | 2021-0235433 | A1 | 29 July 2021 |
| | | | | WO | 2020-060300 | A1 | 26 March 2020 |
| KR | 10-2021-0033370 | A | 26 March 2021 | EP | 4016910 | A1 | 22 June 2022 |
| | | | | WO | 2021-054726 | A1 | 25 March 2021 |

Form PCT/ISA/210 (patent family annex) (July 2019)